Europäisches Patentamt

European Patent Office

Office européen des brevets

(19)

(11) **EP 0 962 098 B1**

(12) **EUROPEAN PATENT SPECIFICATION**

(45) Date of publication and mention
of the grant of the patent:
**14.01.2004  Bulletin 2004/03**

(21) Application number: **98906560.2**

(22) Date of filing: **17.02.1998**

(51) Int Cl.⁷: $H04N\ 7/173$

(86) International application number:
**PCT/US1998/003181**

(87) International publication number:
**WO 1998/037696 (27.08.1998 Gazette 1998/34)**

(54) **BROADCAST DATA DISTRIBUTION SYSTEM WITH ASYMMETRIC UPLINK/DOWNLINK BANDWIDTHS**

RUNDFUNKDATENVERTEILSYSTEM MIT ASYMMETRISCHEN AUF- UND ABWÄRTSVERBINDUNGSBANDBREITEN

SYSTEME DE DISTRIBUTION DE DONNEES DE RADIODIFFUSION A LARGEURS DE BANDE DE LIAISONS MONTANTES/DESCENDANTES ASYMETRIQUES

(84) Designated Contracting States:
**AT BE CH DE DK ES FI FR GB GR IE IT LI LU MC**

(30) Priority: **21.02.1997  US 37354 P**

(43) Date of publication of application:
**08.12.1999  Bulletin 1999/49**

(73) Proprietor: **Pinpoint Incorporated
Fort Worth, Texas 76102 (US)**

(72) Inventors:
• **HERZ, Frederick, S., M.**
**Canaan Valley Davis, WV 26260 (US)**
• **SMITH, Jonathan, M.**
**Princeton, NJ 08540-4165 (US)**
• **WACHOB, David**
**Elkins Park, PA 19117 (US)**

(74) Representative: **Mackenzie, Andrew Bryan et al
Mathisen, Macara & Co.,
The Coach House,
6-8 Swakeleys Road
Ickenham, Uxbridge UB10 8BZ (GB)**

(56) References cited:
**EP-A- 0 669 760                 WO-A-94/10775
WO-A-95/15658**

**Description**

**FIELD OF INVENTION**

This invention relates to the field of data distribution systems and comprises a method, extant in the data distribution system, to enhance the efficiency of the data transfer to thereby reduce the memory requirements of a subscriber network terminal. This enables the subscriber network terminal to be implemented as a simple, low cost terminal device which can interface with an ever changing and expanding capacity data distribution system and yet provide the subscriber with the information required to efficiently access the plethora of data available to the subscriber via the data distribution system.

**PRIOR ART**

WO 95/15658 discloses a network manager that monitors and manages cable headend components and set-top terminals in a television programme delivery system. Customer menus are provided which suggest to the customer available programmes that are likely to be of interest based upon historical data of the subscriber's previous programs watched.

**PROBLEM**

It is a problem in the field of data distribution systems to provide a subscriber with a simple, low cost terminal device which can interface with a changing data distribution system and yet provide the subscriber with the information required to enable the subscriber to efficiently access the plethora of data available to the subscriber via the data distribution system. The data distribution systems of interest are typically cable television (CATV) or Digital Broadcast Satellite (DBS) systems, which concurrently transmit multimedia data streams on a plurality of channels to a subscriber terminal adapter, which has limited memory and functionality, and which functions to receive a selected one of the plurality of broadcast channels for display on a display device, such as the subscriber's television set. In addition, the Internet has the inherent capability to be included in this class of data distribution systems due to its ability to broadcast data to a distributed clientele.

In the 1960s and 1970s, data transmission capabilities were limited and therefore few broadcast channel selections were available to a subscriber of CATV or DBS networks. Today, typical DBS and CATV networks provide several tens of channels, and it is expected that in the near future hundreds of channels will be concurrently broadcast to the subscribers via CATV and DBS networks. This is desirable from both subscriber and content-provider perspectives, as increasingly specialized information can be generated, partitioned and delivered to selected sets of subscribers, whose interests match the content of the broadcast information. An unfortunate by-product of this plethora of information is information overload, and a great deal of a subscriber's time is wasted "channel surfing." This channel surfing comprises the subscriber attempting to locate relevant and/or interesting information from the wealth of broadcast information that is available by methodically switching among the available broadcast channels. This process is inefficient and represents a substantial reduction of the usable information delivered to the subscriber due to the subscriber's inability to locate the desired information in a timely manner.

A problem with the delivery of information to subscribers is the implementation of the subscriber's network interface device which enables the subscriber to interface with the data distribution system. Several scenarios exist for the subscriber network interface device. One is the use of intelligent, high functionality devices such as personal computers. This is presently an unlikely scenario for three reasons. First, personal computers are present in less than 30% of US households, while CATV is presently available in 65% of households. DBS has a lower penetration than personal computers or CATV systems (presently less than 5%) but is expected to increase over time. The problem with requiring the purchase of a relatively expensive subscriber network interface device is that it inhibits unit sales by greatly restricting the market potential. Second, the personal computer market has been characterized by component providers competing to sell technologies, such as network adapters and monitors. In addition, many personal computers are pieced together from components which are manufactured by disparate vendors and the resultant product is sold to consumers with a particular price/performance characteristic. This creates an almost impossible environment from the view of engineering a subscriber network interface device with widespread interoperability, which is necessary from a business point of view for CATV fare. Different software versions and their incompatible requirements further complicate interoperability. Third, the use of a personal computer further exacerbates the risk of the "flashing 12:00" phenomenon seen with VCRs, since the complexity of the personal computer, when used as the subscriber network interface device, inhibits technologically-limited subscribers from gaining access to the information.

A much more likely scenario is the use of a specialized terminal adapter, presently referred to in the media as a "set-top box." In this scenario, the subscriber network interface device comprises a standard television set which is equipped with a terminal adapter, which is specialized to the task of accessing multimedia streams for the subscriber and presenting this information via the television set. This terminal adapter contains a microprocessor as well as any logic necessary for selecting, decompressing, and demultiplexing the concurrently transmitted multimedia data streams. The terminal adapter also handles out-of-band signaling tasks, such as authorizing access to restricted material and executing any protocol required for subscriber/service-provider interaction. Several competing factors are at work in optimizing the terminal adapter. First, as service costs are borne by the service provider in many cases, and service outages annoy subscribers, the terminal adapter must be robust. Second, the terminal adapter must be flexible enough to accommodate any anticipated information delivery scenario within the limits of the DBS or CATV infrastructures. Finally, the terminal adapter must be low-cost enough to either be within the reach of subscriber purchase or a quick cost recovery through leasing to the subscriber. It is important to note that in this latter scenario, while the cost may be amortized over a considerable period, the monthly bill to the subscriber should not exceed the cost of film rentals or be excessive in the view of government regulators.

The terminal adapter includes both a processor and memory, which represents a major cost factor. This memory supports the storage and processing of data and, for many computing applications, the easiest way to speed up a computation task is to add more memory. Unfortunately, there are several factors which preclude equipping the terminal adapter with substantial memory. First is the cost of the memory, which stems both from the amount of memory required and the type of devices required for the terminal adapter. Non-volatile RAMs are required for at least part of the data storage to handle the reliability consequences of power failures or subscribers disconnecting the terminal adapter. The second factor is the need to avoid updating the hardware of the terminal adapter, since this is an expensive operation to implement. An information distribution architecture which requires extensive memory at the terminal adapter forces technicians to make updates at subscriber sites on a regular basis as earlier installations became outdated.

New-generation CATV "convertor" boxes provide storage for information relative to presently broadcast or upcoming programs (or more generally, multimedia data streams). The storage of this "program guide" information in the terminal adapter is quite memory-intensive, on the order of 170 Kbytes, and with the boom in channel availability, will require increases which are proportional to the number of additional channels. The large memory required in the terminal adapter is a consequence of the lack of information about the viewer's tastes and interests, which information could be used to select subsets of the descriptive information for local storage in the terminal adapter. Since no such information is available, all indexing and descriptive information regarding the multitude of concurrently broadcast programs must be transmitted and retained in the memory of the terminal adapter. Thus, there presently is no effective terminal adapter/data distribution system architecture or operation that addresses the subscriber's need to have program guide information in the terminal adapter and yet is frugal in its use of expensive memory.

A further application of this technology is in the field of data retrieval, wherein the subscriber requests data of a specific nature, rather than standard broadcast program fare. In this instance, the information distribution system must discern what information is being requested by the subscriber and provide an efficient mechanism for delivering this information. The delivery of such information is complicated when the subscriber is mobile and requests information from an information source which is not the subscriber's "home location" information source. Such instances include the cellular communications or personal communication system applications as well as the general Internet access application. The subscriber can access any of these services from any physical location by interconnecting with a local purveyor of such services. The information requested by the subscriber can be locale specific, or may be customized for time of day, and the existing information distribution systems cannot produce such specific requests in a manner that is convenient for the subscriber.

## SOLUTION

The above problems are solved and a technical advance achieved in the art by the method of optimizing communication of the present invention as defined in claim 1. The underlying architecture of the data distribution system is typically a hierarchical network, such as cable television. The data distribution system therefore provides a hierarchical filtering of the data content of information requested by or available to a subscriber to reduce the effective bandwidth required to service a subscriber's request for information.

In the embodiments, to accomplish effective filtering, this data distribution system automatically constructs both a target profile for each target object (program or information response) that is broadcast, as well as a "target profile interest summary" for each subscriber, which target profile interest summary describes the subscriber's interest level in various types of target objects. The data distribution system then evaluates the target profiles against the subscribers' target profile interest summaries to generate a subscriber-customized rank ordered listing of target objects most likely to be of interest to each subscriber, so that the subscriber can select from among these potentially relevant target objects, which were automatically selected by this system from the plethora of target objects available on the data distribution system. The target objects themselves are divided into a plurality of information segments, which enables the data distribution system to provide the subscriber with manageable amounts of data. These content based similarity measurements help to determine which of the information segments to transmit and the order of transmission to the subscriber. The similarity measures can also be used to prefetch information segments and deliver these segments to the subscriber in a bandwidth saving manner. This capability is extensible to mobile subscribers who change locale and may require the delivery of location specific information, as a function of their changing locale.

This architecture offers several advantages. First, technology upgrades can be done in the core of the data distribution network, without requiring access to subscriber terminal equipment. Second, there are significant savings in data storage which results from multiplexing this directory information across populations of subscribers. Third, even an extremely limited amount of memory in the terminal adapter can handle complex information streams and subscriber interests with complete generality, due to the segmentation of the target objects.

In the embodiment, the data distribution system is comprised of clients, which are the terminal adapters with extremely limited data storage capacity, and servers, which contain data, such as multimedia information (such as live program feeds and/or video-on-demand) and descriptive information (directory information, schedules, indices) for the multimedia information. Clients are assumed to be under subscriber physical control, while servers are embedded in the physical infrastructure of the data distribution system. The keys to a limited data storage architecture are the intelligent use of local storage, optimized through memory management algorithms, the use of subscriber target profile interest summary information, and the reliance on a communications protocol between client and server to update local storage through server updates and client requests. This results in a distributed architecture for directory information which is robust in the face of change, is low-cost, and utilizes the CATV/DBS infrastructure itself to preserve these properties. In practice, the client is the terminal adapter which comprises the "set-top box." The overall algorithm used by the server to provide the directory information for the client is as follows:

1. If new directory information is loaded into the server, the server stores the information in a schedule data structure. If this information represents an update of previously received directory information, the recipients of the previous directory information (the "copy set") are informed that they should delete that previously received directory information. This ensures that while not necessarily complete, the directory information stored at each client is correct.
2. If the server receives a request from a client for directory information, it obtains the most current directory information from its own storage and sends this to the client.
3. The server periodically sends a time-of-day and date indicator to the client system to ensure synchronization between client and server.

In this manner, the data distribution system maintains synchronization with the subscriber terminal adapters and ensures that the directory information stored therein is maintained at present values. The use of subscriber target interest profile summary filtering of broadcast programs significantly reduces the quantity of directory information required to be stored in the memory of the subscriber terminal adapter, yet functions to direct the subscriber to programs of interest in an efficient manner.

In the instance of information that is other than broadcast programs, the system uses the target profile interest summary for the subscriber to determine what information is of interest to the subscriber. This data can be used to create similarity measures to thereby implement intelligent precaching of data for transmission to the subscriber. The order as well as content of the data transmitted to the requesting subscriber is varied to maximize the efficiency of the data transfer given the limitations of the transmission bandwidth. For mobile subscribers, the system can customize the information delivery as a function of subscriber locale and also precache the data in a locale in anticipation of the arrival of the subscriber.

## BRIEF DESCRIPTION OF THE DRAWING

Figure 1 illustrates in block diagram form a typical architecture of a multimedia distribution system having a customer preference profile system incorporated therein;
Figure 2 illustrates in flow diagram form the method of creating an agreement matrix;
Figure 3 illustrates in flow diagram form the method of selecting virtual channels;
Figure 4 illustrates in block diagram form a typical subscriber terminal adapter used in conjunction with the system of Figure 1;
Figure 5 illustrates in block diagram form the software/firmware architecture of the typical subscriber terminal adapter of Figure 4;
Figure 6 illustrates in flow diagram form the operation of the similarity determination process;
Figure 7 illustrates in flow diagram form the operation of the program matching process;

Figure 8 illustrates the bandwidth utilization of the data distribution system; and

Figures 9 and 10 illustrate various client-server interconnections.

## DETAILED DESCRIPTION

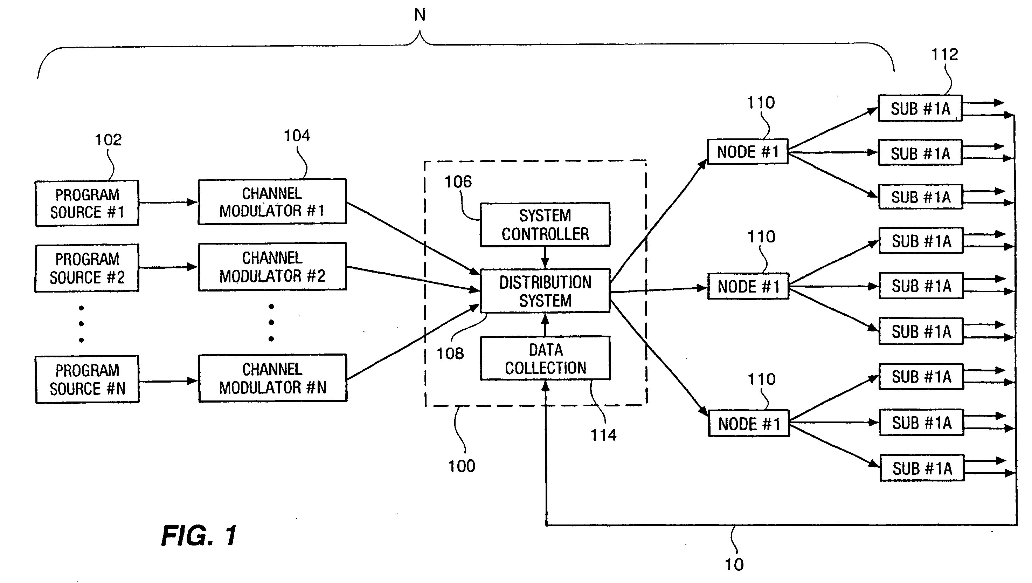

Figure 1 illustrates in block diagram form a typical architecture of the data distribution system of the present invention. The data distribution system is comprised of clients, which are stored in the terminal adapters 112 with extremely limited data storage capacity that are located in the subscriber's premises, and servers, which are data processing 100, data transmission 108 and data storage elements 110 in the network (which could be located at the headend) which contain both multimedia information (such as live feeds and video-on-demand) and descriptive information (directory information, schedules, indices) for the multimedia information. Clients are assumed to be under subscriber physical control, while servers are embedded in the physical infrastructure of the data distribution system. The basic network structure which interconnects the clients and servers is a high-bandwidth multicast downlink/low-bandwidth unicast uplink network. These bandwidth limitations are a matter of practical implementation, and the inequality of bandwidth in the downlink and uplink paths are not a technological necessity.

The data distribution system may be usefully applied within the context of set-top box like devices such as personal digital assistants or network computers, or personal computers used as a form of set-top box, as a method of reducing response time as observed by users. V. N. Padmanabhan and J. C. Mogul, in an article titled "Using Predictive Prefetching to Improve World Wide Web Latency," ACM SIGCOMM Computer Communication Review, July 1996, disclosed a method of prefetching information stored in the Hypertext Transport Protocol (HTTP) of the Internet-based World Wide Web. In essence, the method used "links" to other documents embedded in an HTTP-format file as hints that those links should be followed in prefetching data; that is, the linked documents should be fetched in anticipation of the user's desire to follow the links to those documents. The data distribution system provides two enhancements to this scheme. First, it provides a technological means by which the prefetched data can be intermixed with on-demand data to provide overall improvements in response time to a large population of HTTP/WWW users, with reduced memory requirements. Second, the data distribution system, which views the downlink as a fixed capacity resource, provides a general scheduling method embodying techniques such as user preferences to prefetch when slots or bandwidth are underutilized, to preemptively reduce future demand for bandwidth. The general technique of using similarity-informed prefetching is described at length in copending patent application titled "Pseudonymous Server For System For Customized Electronic Identification Of Desirable Objects", U.S. Patent Application Serial No. 08/550,886, filed October 31, 1995 (Serial Number US 5,754,938).

### Basic Definitions

Relevant definitions of terms for the purpose of this description include: (a) an object available for access by the subscriber, which is typically electronic in nature, is termed a "target object", (b) a digitally represented profile indicating that target object's attributes is termed a "target profile", (c) a profile holding a subscriber's attributes is termed a "subscriber profile", (d) a summary of digital profiles of target objects that a subscriber likes and/or dislikes, is termed the "subscriber target profile interest summary" of that subscriber, (e) a collection of target objects with similar profiles, is termed a "cluster," (f) an aggregate profile formed by averaging the attributes of all tar get objects in a cluster, termed a "cluster profile." In the CATV/DBS examples described herein, the term "program" is used in place of "target object" for clarity of description.

### Network Elements and System Characteristics

The various elements interconnected by the data distribution network N as shown in Figure 1 can be divided into two classes and grouped as illustrated in Figure 1: clients and servers. In the CATV example, the plurality of clients are each an individual subscriber's terminal adapter 112 which is connected to servers 102 (program sources) via data communication links. The clients are not continuously on-line, since they typically serve a single subscriber household and the usage pattern is a function of subscriber activity. A server 102 is typically a program source system that is presumed to be continuously on-line and functions to either broadcast a series of programs in a predetermined ordering or retrieve and broadcast a program specifically selected by a subscriber (video on demand). The server 102 is equipped with persistent storage, such as a magnetic tape or magnetic disk data storage medium, and is interconnected with clients via data communications links. The data communications links can be of arbitrary topology and architecture, and are described herein for the purpose of simplicity as a typical cable television topology. In particular, the present CATV architecture is a wire plant which emulates broadcast television. In all practical aspects, it can be viewed as a tree, from which information is taken out by subscribers at the leaves and put in by the program source at the root. For example, the installation of a satellite dish at the root of the network, which feeds the remaining infrastructure, enables the output of the satellite dish to be multiplexed across a number of subscribers connected via coaxial cable. A digital broadcast satellite system can also be viewed as a rather flat tree (with the root in orbit) fed from several sources.

In the cable television system, a plurality of program sources 102 generate programs which are modulated by a plurality of channel modulators 104 and transmitted to a distribution system 108. The distribution system 108 is part of a head end 100 which retransmits the received programs via respective nodes 110 to subscriber terminal adapters 112. The subscriber terminal adapters 112 contain software and headend system 100 also contains software extant on system controller 106 to determine which programs are of likely interest for each subscriber. This program selection software controls the programming of virtual channels to the subscriber terminal adapter 112 to select from among plurality of channels that are broadcast over the network N to the head end 100. The subscriber can use the subscriber terminal adapter 112 to select from the automatically generated virtual channels or the actual broadcast channels available from the head end 100.

Passive feedback relating to subscriber preferences for use in future program scheduling can be incorporated in this data distribution system via a subscriber data collection element 114 which is connected to the head end 100. In this embodiment, the generation of a target profile interest summary for a subscriber can be implemented at head end 100, which enables the head end operator to ascertain which programming is desired by the collection of subscribers, or it can be implemented in the subscriber terminal adapter 112. In the former case, the program selection software acts as a filter to enable virtual channel data to be created at the subscriber terminal adapter 112. The return signals to the head end 100 can be carried via the CATV system or via telephone lines 10 using a wired return path for data collection. Thus, the basic network structure which interconnects the clients and servers is a high-bandwidth multicast downlink/low-bandwidth unicast uplink network.

While the above description is focused on the domain of channel selection in a CATV broadcast television setting, the multiplicity of channels enabled by digital technology and compression technology can allow the use of these channels in a mode very much like a true "Video on Demand" (VoD) system. The multiplicity of channels could be used in a "frequency-hopped" mode (from the perspective of any given stream) to provide access to bursty data such as MPEG-compressed streams of video. The descriptive information could be used for program selection, display, and to customize the selections and scheduling of the program.

### Subscriber Terminal Adapter

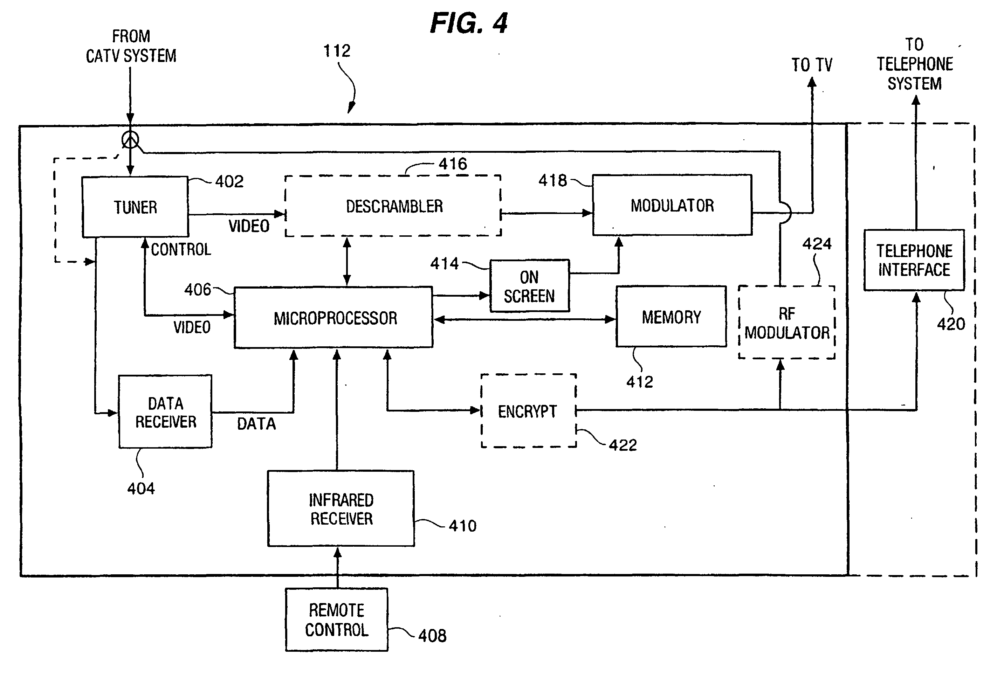

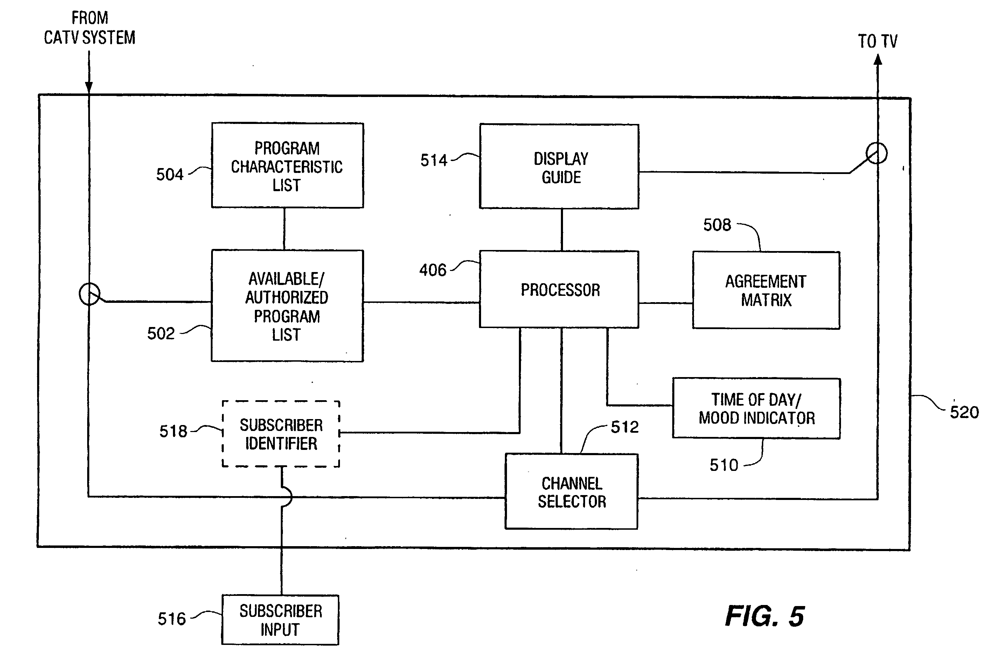

Figure 4 illustrates in block diagram form the overall architecture of a typical subscriber terminal adapter for the CATV application, while Figure 5 illustrates the architecture of the software/firmware resident therein. In particular, the program materials and the corresponding program content profile/directory information are received from the head end 100 via tuner 402 to the data receiver 404. Alternatively, the content profile/directory information can be received via a dedicated data channel (illustrated by the dotted line in Figure 4) which can bypass the tuner 402. In either case, the program content profile/directory information that are received can be a subset of the materials available at the head end 100, with the materials representing a distillation of the available information, modulated by the target profile interest summary for this subscriber.

If the program materials transmitted by the head end 100 are scrambled, the scrambled received program materials are transmitted from the tuner 402 to the descrambler 416 prior to being processed by processor 406 and/or modulated by modulator 418 for display. If the tuner 402 selects a one of the concurrently broadcast channels, the content profile/directory information is supplied to processor 406 either directly if the received program contains content profile/directory information in its vertical blanking interval, or via data receiver 404. Processor 406 reviews the content profile/directory information associated with the program material to determine whether there is a correspondence between the target profile for this program material and the subscriber's target profile interest summary. Input from the subscriber is available via the subscriber terminal adapter 112 generating display menus via on screen menu device 414 and the subscriber using remote control device 408 and infrared receiver 410 as is well known in the broadcast television art. The subscriber target profile interest summary is stored in memory 412 and is used to ascertain the appropriateness of the various programs broadcast to the subscriber terminal adapter 112. The processor 406 selects a plurality of the received programs as corresponding to the subscriber target profile interest summary and assigns these programs to virtual channels for consideration by the subscriber. The virtual channels are presented to the subscriber via the television set as is well known. The subscriber can then select one of the virtual channels or any other available channel to view a program selected by the subscriber.

A telephone interface 420 provides a communication path in a unicast mode from the subscriber terminal adapter 112 to the head end 100 via data collection circuit 114 to enable processor 406 to transmit the collected viewing habit data and subscriber target profile interest summary data from memory 412 to the head end 100. The subscriber target profile interest summary data can optionally be maintained in confidence by the use of encryption device 422 to prevent unauthorized access to this data. In addition, the subscriber target profile interest summary data can be returned to the head end 100 via the use of RF modulator 424 to enable the bidirectional use of the head end 100-subscriber terminal adapter 112 link.

The software/firmware which is operational in the subscriber terminal adapter 112 to perform the control functions described above is illustrated in block diagram form in Figure 5. In particular, an authorized service segment 502 of memory 412 is used to store data indicative of the programs which the subscriber is authorized to receive as part of the subscription to the CATV network. The content profile/directory information associated with these authorized programs are stored in directory segment 504, which data is used by processor 406 to calculate the listing of programs which the subscriber is likely to wish to view (termed agreement matrix). The agreement matrix 508 is stored in memory 412 as is an associated time of day 510, which is either locally generated or received from the head end 100. From the agreement matrix 508, processor 406 calculates a list of virtual channels which is entered into the program guide listing 514. The program guide listing 514 is displayed to the subscriber via the subscriber television set in well known fashion so that the subscriber can select a program from the available choices. Once the subscriber selects a program from the program guide listing 514, the processor 406 activates channel selector 512 to tune to the channel which contains the broadcast of the selected program. The subscriber can also view the generated subscriber target profile interest summary to thereby enable the subscriber to manually adjust or modify the data contained therein to reflect changes in the subscriber's desired viewing habits. The integrity of the subscriber target profile interest summary data is maintained by use of a subscriber identifier 518 which ensures that the subscriber input device 516 is not manipulated by an individual other than the designated subscriber.

### Data Storage Architecture

The keys to a limited data storage architecture in this data distribution system are the intelligent use of local storage (memory 412), optimized through memory management algorithms and the reliance on a communications protocol between client and server to update local data storage (memory 412) through server updates and client requests. This results in a distributed architecture for directory information which is robust in the face of change, is low-cost, and utilizes the CATV infrastructure itself to preserve these properties. Since the client is the terminal adapter 112 in the form of the "set-top box," the overall data distribution algorithm used by the server is as follows:

1. If new directory information is loaded into the server, the server stores the information in a schedule data structure. If this information represents an update of directory information previously received from the server, the recipients of the previous directory information (the "copy set") are informed that they should delete that previously received directory information and replace it with the newly received directory information. This ensures that while the directory information at a client may not necessarily be complete, it is correct.

2. If the server receives a request from a client for directory information, it obtains the most current directory information from its own storage and sends this to the client.

3. The server periodically sends a time-of-day and date indicator information to the client system to ensure synchronization between client and server.

In this manner, the data distribution system maintains synchronization with the subscriber terminal adapters 112 and ensures that the directory information stored therein is maintained at present values. The use of subscriber target interest profile summary filtering of broadcast programs significantly reduces the quantity of directory information required to be stored in the memory of the subscriber terminal adapter, yet functions to direct the subscriber to programs of interest in an efficient manner.

### Data Transfer Process

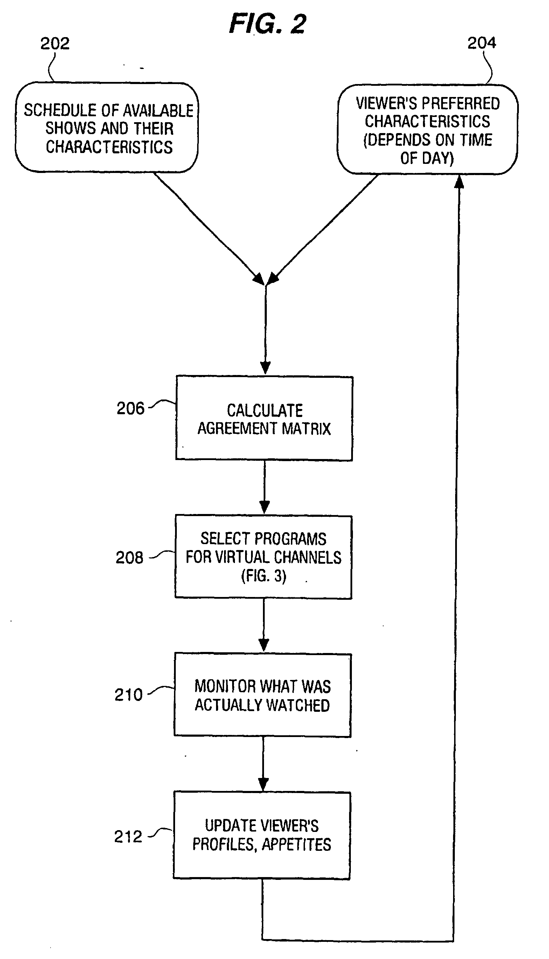

Figure 2 illustrates in flow diagram form the process by which the directory information is provided to the subscriber terminal adapter 112 and the agreement matrix is generated. This process can be implemented in the data distribution system or in the subscriber terminal adapter 112, as a function of the transmission bandwidth available as well as the data storage capacity of the subscriber terminal adapter 112. It is assumed for the purpose of this description that the process takes place in whole or at least in part, in the data distribution system, and in particular the system controller 106 of the head end 108. The schedule of available programs and their characteristics (content profiles) is created and stored in a database in the head end 100 at step 201. The subscriber target profile interest summaries are downloaded for a given time period from the subscriber terminal adapter 112 and, at step 204, stored in a database. The subscriber target profile interest summaries comprise the subscribers' preferences for programs and preferably vary as a function of time of day, which is typically a function of the identity of the multitude of viewers in the subscriber household.

The content profiles received with the electronic program guide data are matched with subscriber-specific preferences (subscriber target profile interest summaries) to create an agreement matrix at step 206. Once the agreement matrix has been created, the programs with the highest values for correspondence to the subscriber's preferences are prioritized and selected for presentation to the subscriber as virtual channels at step 208. The virtual channel assignment is processed in priority order, with the most desirable programs being assigned first to virtual channels until all desired programs are assigned. However, the virtual channel assignment is terminated if there are insufficient virtual channels for the number of programs matched by the agreement matrix. It is preferable that the subscriber target profile interest summaries and content profiles be updated to allow for changes in the subscriber preferences as well as to correct for errors in the initial determination. At step 210, the system controller 106 maintains a record of programs accessed by the subscriber and length of access time. At step 212, the subscriber target profile interest summaries are updated in the subscriber terminal adapter 112.

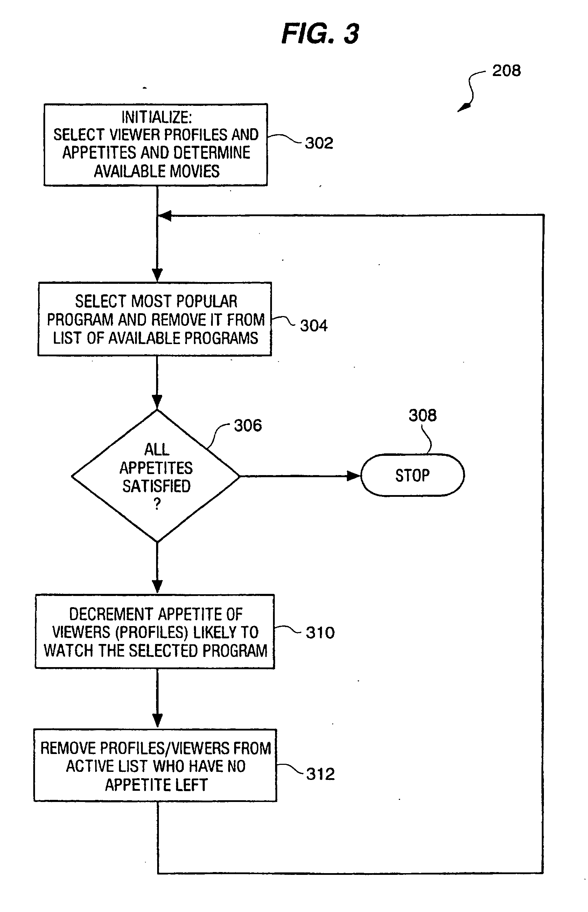

Once the agreement matrix is created, the selection of virtual channels can be accomplished by means of the process illustrated in flow diagram form in Figure 3. At step 302, determine which subscriber target profile interest summary is active for the time period to be scheduled. The available programs are determined by selecting a subset of all available programs indicative of the extent of the subscriber's program subscription. An agreement matrix is created at step 304 for the available programs and the most popular programs for the subscriber are selected. At step 306 it is determined whether all of the subscriber's preferences are matched and whether any additional programs are available to match any subscriber preferences that remain. At step 308, the scheduling process is exited if all preferences are matched with the available programs. If not, at steps 310 and 312 the preference list is decremented to eliminate those preferences matched and processing returns to step 304.

## Digital Broadcast Satellite Background

Digital Broadcast Satellite (DBS) technology provides an asymmetrical uplink/downlink bandwidth broadcast network, similar to the CATV network described above. The technology relies on relatively high power, widely-spaced satellites which can achieve digital transmission rates of either 30 Mbps (in a reduced error-correcting code mode of 30 Mbps for data and 10 Mbps for protection coding) or 23 Mbps (in a more robust coding configuration with 23 Mbps for data and 17 Mbps for protection coding). Either configuration is achieved with a digitally coded 23 MHz broadband satellite channel.

Use of the channel for television signals is obtained with digital compression technologies, either the Motion Picture Experts Group (MPEG) standard (MPEG-II) or proprietary standards developed by industry. There is heavily reliance on complex real-time decompression technologies embedded in the receiving units, which can be viewed as the DBS analogue of the set-top-box in the CATV domain. The receiving units are characterized by small receiving dishes (18"-36"), connected to the set-top-box analogue via coaxial cabling or other means. Decompression algorithms operant in the box convert the raw digital signals to a format suitable for display on an NTSC television. The algorithms are of considerable complexity and are implemented via Application-Specific Integrated Circuit (ASIC) or Digital Signal Processor type technologies in combination with other specialized processing. The total cost of configurations can be brought to under $1000 dollars. The cost of the electronic components will decline consistent with other electronic communication and computation technologies, although limits defined by power and packaging will remain and limit the cost reductions possible.

The memory requirements of any configurations are expected to be small, as the television applications are the main application envisioned for the technology. Many of the proposed systems (e.g., Primestar, DIRECTV/USS, EchoStar and AlphaStar) are television-oriented, although there is some direct access to the digital streams provided via high-speed access ports in some implementations of the set-top-box analogues. While this seems intended for future High-Definition Television (HDTV) applications, its presence illustrates a considerable opportunity to use this high-speed digital access in future configurations. The set-top-box analogues typically provide an RJ11 jack used for communication with the Public-Switched Telephone Network (PSTN) which is used for transmission of billing information or so-called "impulse pay-per-view" response information.

This data distribution system is comprised of clients, which are end-user terminals with extremely limited storage capacity (dictated by the factors we have discussed previously in this disclosure), and servers, which contain multimedia information (such as video-on-demand) and in addition descriptive information (directory information, schedules, indices) for the multimedia information. Clients are assumed to be under customer physical control, while servers in the DBS case are likely to be uplinked to the satellite transponder. This results in a distributed architecture for directory information which is robust in the face of change, is low-cost, and utilizes the DBS infrastructure itself to preserve these properties. In practice, the client of the architecture is the "set-top box" like entity for DBS that we have previously discussed.

## Special Considerations for DBS Versus CATV

There are a number of limitations of the DBS system versus CATV. In particular, these are:

1. Error rates - The characteristics of the radio channel are such that heavyweight error protection coding must be in place, consuming up to 50% of channel capacity. This is a major difference, but does not affect our architecture.
2. Low exploitation of Hierarchy (extremely flat network) A major problem with DBS or satellite is general is that it is broadcast and wide area. Broadcast is not so much of a problem as the wide area. Broadcast is a specialization of multicast, and de facto, means that all interested receivers will find the information available. The wide area advantage is that the satellite material can be widely distributed, but does not give us the opportunity to insert memory nodes at points internal to the multicast distribution tree, as in fact there are NO such points.
3. Much lower back channel bandwidth - CATV offers the possibility of reasonably high performance channels which clients can use to select cells for inclusion in their memory regions. Required transmitter power precludes using a satellite transceiver at client sites; there is a receiver and another means of reply (e.g., the PSTN).
4. Interoperability.- There is possibly a limited ability to interoperate with the ATM cell-like format we have utilized in this disclosure. An overlay is possible on the underlying digital packet format using appropriate fragmentation and reassembly algorithms at the boundary between formats.

## Memory Reduction Technique In Wireless ATM Technology

Asynchronous Transfer Mode (ATM) is a link multiplexing technique which has found wide use in core telecommunications networks ("backbones") due to its ability to allocate bandwidth resources at a fine granularity, e.g., 48-octet "cells" of data. Considerable background material on ATM exists in the technical literature; for example A. Fraser of Bell Laboratories discusses the history of the Asynchronous Time-Division Multiplexing Technique in his 1994 ACM SIGCOMM Award lecture, which has been reprinted in ACM Computer Communication Review. There are a number of publications which discuss terminal adapters for these networks in the context of high-performance workstations. These designs require considerable memory to operate successfully, mainly for buffering of arriving data in order to prevent dropped data, and its consequence of poor system performance. Considerably less attention has been paid to ATM support for lower-cost devices, such as those which may used by consumers for everyday tasks in the future, e.g., wireless personal digital assistants. These devices will be characterized by low cost, light weight, and will place a premium on long battery life. Wireless ATM is operational in laboratory settings and can bear video traffic. Thus, it provides an environment to which the memory-reduction schemes we developed for CATV and DBS also apply.

## Memory Reduction For Mobile Viewing Systems

Reducing the memory requirements of future wireless terminals is very important today for technology and cost reasons, and is likely to remain so in the foreseeable future. Memory is the major cost in many of today's information handling devices, tethered or wireless. Memory is a major consumer of power in mobile wireless systems, and that a consequence is that reduced memory results in longer battery life in many cases. The advantages of memory-use reduction techniques in wireless systems are summarized as follows:

1. The systems are more compact, as less memory and fewer batteries are needed.
2. For the same reasons, they are lighter.
3. Longer battery life for diskless mobile terminals can be achieved.
4. They cost less.

## Implementation Of A Client/Server Architecture On Wireless ATM

The data distribution system is comprised of clients, which are end-user terminals with extremely limited storage capacity (dictated by the factors we have discussed previously in this disclosure), and servers, which contain multimedia information (such as video-on-demand) and in addition descriptive information (directory information, schedules, indices) for the multimedia information. Clients are assumed to be under customer physical control. This results in a distributed architecture for directory information which is robust in the face of change, is low-cost, and utilizes the wireless ATM infrastructure. In practice, the client of the architecture is a low-cost mobile "set-top box" analogue, whose advantages we have summarized briefly in Section 2.

## Implementation of the Client/Server Architecture

The data distribution system is comprised of clients, which are end-user terminals with extremely limited storage capacity (dictated by the factors we have discussed previously in this disclosure), and servers, which contain multimedia information (such as video-on-demand) and in addition descriptive information (directory information, schedules, indices) for the multimedia information. Clients are assumed to be under customer physical control, while servers in the DBS case are likely to be uplinked to the satellite transponder. This results in a distributed architecture for directory information which is robust in the face of change, is low-cost, and utilizes the DBS infrastructure itself to preserve these properties. In practice, the client of the architecture is the "set-top box" like entity for DBS that we have previously discussed.

There are several alternatives for our Client/Server architecture to be realized. Among these are:

1. sharing of a dish among several client sites, allowing a limited form of hierarchy and memory savings. A very simple example of this might be in an apartment building or townhouse configuration.
2. storing of considerable data in memory at the uplink point in the system.

This is fact where the server portion of the architecture should be located for our architecture to work. The idea here is that the server site contains all of the information that the small-memory set top boxes might need. Without hierarchy, the selectivity of the similarity algorithms will not offer any statistical gain. The method to attack this problem is as follows:

1. Allocate a fraction of a DBS channel. This channel will be used as a "memory" by the client/server algorithm. For example, consider using 1 Mbps of bandwidth. This would give about 2300 cells per second. The use of the similarity algorithm would be to select which cells to send in the next second. If the response time must be better than 1 second, the scheduling interval can be a smaller value, such as 1/30 second (although round-trip delays could be problematic).
2. Schedule the bandwidth utilization based on the need for memory cells at the client. This schedule is VERY similar to that used in the CATV-oriented realization.

### Server/Ground Station Algorithm:

The overall algorithm used by the server is as follows:

1. If new directory information is loaded into the server, the server stores the information in a schedule data structure. If this information represents an update of previous information, the recipients of the previous information (the "copy set") are informed that they should delete that information. This ensures that while not necessarily complete, the information at each client will be correct.
2. If the server receives a request from a client for directory information, it obtains the most current information from its own storage and sends this to the client.
3. The server periodically sends a time-of-day and date indicator to the client system.

### Detailed Description of Server Actions

Each head end 100 in the broadcast or multicast network operates in a manner as noted above to distribute a limited subset of directory information to the subscriber terminal adapters (clients) 112 to thereby enable the subscribers to review only the segments of the overall directory information which are pertinent to that subscriber. To accomplish this task in an expeditious fashion, the format of the data, its content and management are regulated to ensure data transmission and storage efficiency. Therefore, the following list of characteristics represents a specific implementation of this data distribution architecture for the CATV application:

1. The head end 100 is equipped with a clock which maintains the current time of day.
2. The head end 100 has a current "schedule" for directory information delivery. Directory information is indexed by <Channel Identifier, Slot Start, Slot End> 3-tuples. These indices are used to look up information about the program material presented in the identified slot.
3. A Slot is typically a predetermined segment of time, such as a ½ hour time period, while a Channel Identifier is data representative of the broadcast channel number on the broadcast network. This architecture also applies to video-on-demand starting at arbitrary times, with arbitrary durations, or minute by minute "microscheduling" of program material, since the slot start and end times are noted as well as the channel on which the subscriber terminal adapter can access the desired program material.
4. The program material which is broadcast in the identified time slot is described by a second 3-tuple: <Name, Textual Description, Other>. The Name field is the name used for the program material and is typically a short piece of text. The Textual Description field is text describing the program material, and might include summaries, movie reviews, script excerpts, actors names, awards won by the film, etc. The Other field is intended for extensibility at this point in time, and might include still photos, indications of violence or other adult content, or information about other program material in a series.

5. Program Material is stored in memory in the head end 100 in fixed-size units. The extent of a fixed-size unit is selected to minimize wasted space in both head end 100 and terminal adapter 112. In a memory architecture with a fixed size blocks, the storage of large variable-size objects (the descriptions) typically results in ½ of the block size being wasted. Such considerations have been extensively discussed in the literature on demand-paged virtual memory. For this disclosure, the storage units are termed "cells."

6. While not restricting the cell size to 48 octets (bytes), this size may be useful for interoperation with future computer networks based on the Asynchronous Transfer Mode (ATM) technology, which provides cells (packets) with a payload size of 48 octets.

7. A cell size of 48 bytes should capture most program material Titles in a single cell. The techniques described next can be used if the Title information is longer than a single cell.

8. The Textual Description and Other information are variable-sized and in all likelihood larger than a single cell. They are easily stored using multiple cells, either by allocating a sequence of cells large enough to contain the complete information from the memory of head end 100, or alternatively, allocating a linked list of cells where a cell contains information leading to the next cell. An example of such a linked list in the "C" computer programming language providing the appropriate structure would be:

```
struct linked_list_of_cell_bodies { char *c_body;
/* pointer to 48 byte cell */
struct linked_list_of_cell_bodies *c_next;        };
```

Therefore, the text "and Peter Sellers plays both the President and Doctor Strangelove in this classic black comedy about the Cold War" might be stored in three pieces: "and Peter Sellers plays both the President and D," in Cell Body #1, "Doctor Strangelove in this classic black comedy a," in Cell Body #2, and "bout the Cold War" in Cell Body #3.

The linked list data structure, like a more complex virtual memory scheme, offers advantages in multiplexing storage in comparison to a scheme where contiguous areas of memory are required.

9. The head end 100 periodically transmits directory information to clients along the downlink channel. A key innovation of this data distribution system is the method for scheduling the transmission of directory information. It combines the similarity-measurement technology with specific characteristics of the high-bandwidth multicast downlink/low-bandwidth unicast uplink networks. Information is transmitted in units of cells, and for specificity consider these cells to be 48 octet data objects. At any data rate, a set of number of cells per unit time, e.g., for a MHZ channel, one bit per baud, there are 6 megabits or 750,000 octets per second transmitted. These octets can be grouped as 48 octet cells and 15,625 such cells can be transmitted per second. While any interval can be used, it is convenient to use an interval of 1 second, as this is both a convenient term for engineering analyses and happens to be an acceptable delay for most human subscribers to consider behavior-"instantaneous." With 15,625 cells per second, each second in the schedule could contain, for example, titles for all current programs on a 500 channel system and leave 15,000 cells for other information in the same second. It should be clear that higher data rates provide more cells per second and lower data rates provide fewer.

The schedule for the cells, Cell[1]...Cell[15625] is developed using the novel schemes of our previous application combined with some new features to reduce memory usage and support rapid interaction. The scheduling problem can be looked at as a job-shop scheduling problem. Subscriber requests for information (described below when discussing the Client Algorithm) can be viewed as requests for transmission of cells. These cells might contain title information, Textual Descriptions of program material, or Other information about the program material. Each cell is fully identified in the system as a whole by a <Channel Identifier, Time, Cell #> 3-tuple, with the Cell # indicating its position in the <Name, Textual Description, Other> 3-tuple. These indices can be made more or less structured to ease implementation.

10. The schedule is developed according to priorities from highest to lowest. An example priority scheme is:

a.) Subscriber requests for Names, oldest request first, one cell interval at a time is allocated until all the requested Names are transmitted.

b.) Subscriber requests for Textual Descriptions, oldest request first. For equally old requests, one cell interval at a time is allocated until all the requested text is transmitted.

c.) Subscriber requests for Other information, oldest request first. For equally old requests, one cell interval at a time is allocated until all the requested data is transmitted.

d.) Textual Descriptions associated with subscriber Name requests, oldest request first. For equally old requests, one cell interval at a time is allocated until all the requested text is transmitted.

e.) Other information associated with subscriber Name requests, oldest request first. For equally old requests, one cell interval at a time is allocated until all the requested text is transmitted.

f.) Names for program material in future time intervals determined similar to subscriber interests based on analysis of textual descriptions or other subscriber behavior available to the scheduler, such as typical usage times for the viewing device, typical channel selections, etc.

g.) Textual descriptions,....

h.) Other,...

11. The intent of the priority scheme is to preserve good interactive behavior, fairness to the subscriber population (sharing of the channel they all pay for) and good utilization of the downstream channel. Giving lower priorities to the anticipated viewing habits allows the information to be preloaded to the subscriber terminal adapters when the channel is otherwise unneeded by specific subscriber requests. When subscribers have made specific requests, the requests take priority in order to provide best interactive response time. Names take priority as Names are often used to channel surf, and bandwidth would be wasted if the descriptions were sent for Names that are discarded. Other priority schemes can be used, such as pricing-based or closeness to the present time and the present example is merely meant to illustrate and teach how a schedule for cell transmission at a Server can be developed under a set of policy constraints.

## Client Algorithm

In an analogous manner, the following list of characteristics represents a specific implementation of the algorithm used by the Client (subscriber terminal adapter 112) in this data distribution architecture for the CATV application:

1. Client memory is organized in units of cells.
2. Clients have limited memory.
3. Clients prioritize the storage of information.
4. One priority scheme might be:

a.) Name of material presently being viewed

b.) Textual Description of material being viewed, or even only the first few cells of this if memory is extremely limited;

c.) Other information about the material currently being viewed, or even only the first few cells of this if memory is extremely limited;

d.) Name information of material presently available on a selected set of other channels;

e.) Textual Descriptions and Other information on material currently available on a selected set of other channels;

f.) Name information of material available in the future on a selected set of other channels, prioritized by nearness in time;

g.) Textual Descriptions and Other information on material available in the future on a selected set of other channels, prioritized by nearness in time.

Presuming sufficient storage is available, affinity matrices can be developed to select channel and program material. The usage of the Client Storage is optimized when the subscriber terminal adapter is able to provide the subscriber instantaneous or near-instantaneous selection of material with a minimum of data storage. Of course, as with most information systems, more data storage improves performance, but even the most minimal data storage architecture (1 cell) combined with the Client/Server protocol, can provide a correctly functioning data distribution system. A single 64 Kbit RAM chip provides capacity for slightly more than 160 cells, so this extreme is unlikely. When the Server correctly anticipates Client needs, the downlink schedule is optimized.

5. Information for expired time intervals is immediately discarded.

6. Information from the server is requested as <Channel Identifier,' Time, Cell #> 3-tuples.

7. Information requests are spurred by subscriber interaction, or expected needs based on history data maintained at the server.

8. Information requests can include requests to send groups of cells, such as those associated with a complete Textual Description or Other information. This allows the multiplexing of the downstream channel between subscribers as described in the Server algorithm section.

9. When a cell arrives, for example after a request has been issued, it is examined for priority versus the present set of cells. If there are available unused cells in the memory of the subscriber terminal adapter, the received cell is stored. If no cells are free in the memory of the subscriber terminal adapter, the priority of the cell is compared to cells presently stored in the subscriber terminal adapter. If the priority of the newly received cell is higher than the priority of at least one previously stored cell, the lowest priority resident cell is discarded and replaced by the higher-priority new arrival cell. Note that this process applies to both requested and unrequested cells and allows for anticipated usage when memory is available to do so, as well as cell-by-cell updates for extremely low-capacity subscriber terminal adapters.

**Prefetch**

Bandwidth is greater at the root end of a hierarchical node network system, in anticipation of a request, it is prudent to use the similarity measure to predictively cache files into local servers and further to narrowcast selections into given distribution cells and (hierarchical) sub-cells through sub-servers based on what selections are most likely to be requested in each cell so as to significantly increase the utilization of bandwidth via this hierarchical narrowcast configuration. The importance of this savings appears in proportion to the degree of granularity (smallness of the cell) in the narrowcast architecture. This technique can also be used to make decisions for scheduling what data should be placed on dedicated channels. This may be more network efficient if a file were popular enough to be continuously in the queue because upon submission of a request a file may be partially downloaded regardless of where in the length of the file the download began. The (initially) missed portion of the file can then be immediately picked up as the file narrowcast starts over, thus completing the download in the same time period as if a special request for the file were made. Mobile users whose geographic locations are known can have files precached (e.g. at night) into the servers which are presently physically closest to them at any given time

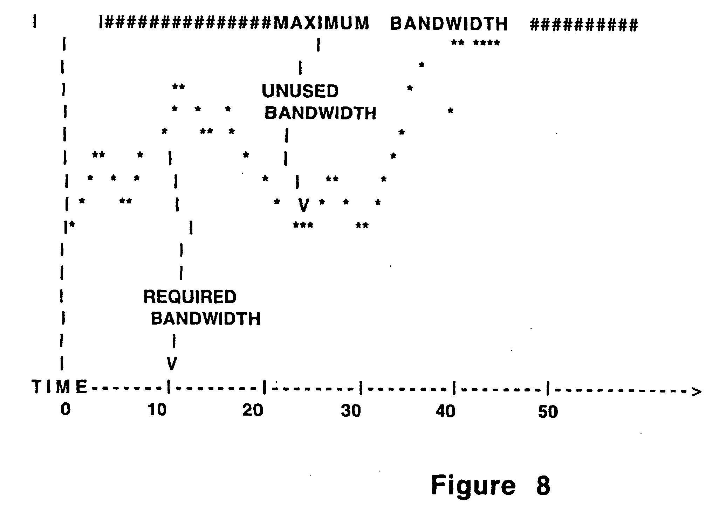

The present data distribution system employs the idea of prefetching, which has also been referred to as pre-caching, cache-preloading, or anticipation in the technical literature. The basic idea is that if good predictions of future data requirements are available, and there is excess data-fetching capability available, the data should be fetched aggressively in anticipation of future needs. If successful, this technique has two major benefits applicable to present and future networks. First, it can reduce (i.e., improve) response-time, a major performance advantage in interactive systems. Second, it can reduce congestion and other problems associated with network overload. In Figure 8, we illustrate a possible time series of bandwidths required by an application or set of applications. To understand how the responsiveness of the system is improved, it can be seen that the unused bandwidth can be used to transmit information likely to be used in the future. For example, if a list is being traversed 1,2,3,4,... it is likely that if object N has been requested, that object N+1 will be the next request. If N+1 is prefetched from the remote system, it will be available when the request is made with additional delays. All of the "UNUSED BANDWIDTH" illustrated in Figure 8 can potentially be used to pre-fetch. To understand why congestion can be reduced, we first note that congestion is due to inadequate resources. The simplest example is in sufficient road capacity for the offered load, leading to "traffic jams." Packet-switched networks such as the IP Internet suffer from similar problems. In Figure 8, it appears that capacity is being reached or exceeded near TIME=43 or so. If demands are made during this period, traffic is likely to be delayed or even lost. If we prefetch successfully during more lightly-loaded periods (such as TIME=0..42), we reduce the probability of data being requested in the future, essentially trading the guarantee of a fully loaded network today for the promise of no congestion in the future. By fetching data in anticipation of future needs, we reduce (at least probabilistically) those future needs.

Prefetching has been used in the computer operating systems field for several decades, and a variety of algorithms have been explored. A. J. Smith of Berkeley has reported that the only case where successful predictions about future requests for memory objects can be made is when accesses are sequential. More recent work for higher-level content such as World-Wide Web (WWW) hypertext has shown that user-authored links to other hypermedia documents can be followed with some success.

The prefetching technology of this disclosure is based on unused slots being filled with pre-sent information based on our understanding of user interest using the similarity measures developed in the large original application, and used for our prioritization (see p. 18 of the current invention disclosure), a concept that they do not deal with, as they follow http: links based on observations about the high probability that these links will be followed by users.

The present invention may be usefully applied within the context of set-top box like devices such as personal digital assistants or network computers, or personal computers used as a form of set-top box, as a method of reducing response time as observed by users. This method used "links" to other documents embedded in an HTTP-format file as hints that those links should be followed in prefetching data; that is, the linked documents should be fetched in anticipation of the user's desire to follow the links to those documents.

The present invention provides two enhancements to this scheme. First, it provides a technological means by which the prefetched data can be intermixed with on-demand data to provide overall improvements in response time to a large population of HTTP/WWW users, with reduced memory requirements. Second, the present invention, which views the downlink as a fixed capacity resource, provides a general scheduling method embodying techniques such as user preferences to prefetch when slots or bandwidth are underutilized, to preemptively reduce future demand for bandwidth. The general technique of using similarity-informed prefetching is described at length in a copending patent application entitled "Pseudonymous Server For System For Customized Electronic Identification Of Desirable Objects", U.S. Patent Application Serial No. 08/550,886, filed October 31, 1995 (S.N. US 5,754,938).

**Artificial Delays**

This note discusses the notion of "artificial delays" in the queuing of requests for the satellite or cable system to which our set top boxes are attached. The idea is that by careful management of the queues, we can effect significant bandwidth savings for the system as a whole. The Server scheduling algorithm goes like this:

The client set-top box (of which there should be many) sends REQUESTs for information in cell-sized units to the server system. The server system applies a priority algorithm (see especially Step 10, below) to CHOOSE the next cell to send. By design of the relative priorities, we can get good responsiveness and reduced bandwidth needs, in spite of the low memory needs (and low cost) of the set top boxes.

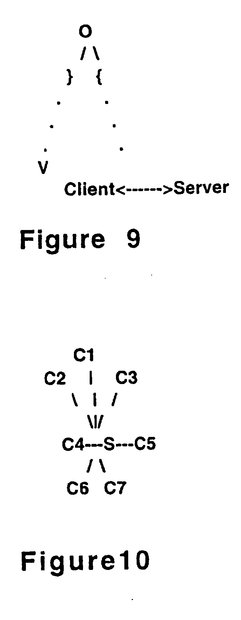

Imagine the scenario where there are MANY set tops connected to the server. This situation might be as illustrated in Figure 9, where the Cs are Clients and the S is a Server. Now clearly, there is a multiplicity of Clients, and by virtue of this multiplicity, we may be able to achieve a savings through appropriate delays. I again believe the similarity measure is the key to success here, and to novelty. Consider the cell requests for Clients C1, C4 and C5, shown below using letters to indicate particular cells as discussed in our disclosure text.

        C1: E-T-A-O-I-N-S-H-R-D-L-U..........
        C4: N-A-T-I-O-N-A-L-V-E-L.................
        C5: E-A-T-O-N-L-Y-S-U-D..............

We mark these cell request with times associated with their transmission intervals:

        T:
        I: 0 0 0 0 0 0 0 0 0 1 1 1 1
        M: 1-2-3-4-5-6-7-8-9-0-1-2-3........
        E:

Now, for convenience, assume that all of the cell requests show above have the same priority. Then the server might actually send the following sequence of cells over the channel:

        S: E-N-E-T-A-A-A-T-T-O-I-O.....

Thus, we are servicing the cell requests C1-C4-C5-C1-C4-C5..... (in fact, the Server may notice the overlaps between requests by C1 and C5 in the first interval, C4 and C5 in the second interval, C4 and C5 in the third interval, and C1 and C5 in the fourth interval, giving:

S:E-N-T-A-A-T-O-I-I-O-N-N...

)

Imagine that the clients are always listening. Then, we can delay cell requests in the HOPE that the REPLYS can be MERGED, satisfying multiple set-top-box clients with the same REPLY. To make this concrete, consider delaying service by one period. So the output of the server then looks like:

S:#-E-N-T-A-O-I-N-L-S-A-Y....

What is going on here is very subtle. By delaying some clients service requests, we are INCREASING THE PROBABILITY that another such request will come in, which can we can fold into service of the equivalent delayed request. The cost is potentially in delay, but with enough overlap, the cell times are short enough for 48 byes on a DBS channel that we can probably delay significantly.

Considering the problem theoretically for a moment, we can compute the gain for the an acceptable delay D as being the number of redundant transmissions which are eliminated due to a delay D. So, for delays of from 1 to 10 cell times the total number of DBS cells without redundancy checks is 30; the number required when this small optimization is applied is as shown below:

Delay DBS CellsBandwidth Savings
0 24 30/24=25%
1 18 30/18=66%
2 17 30/17=76%
3 17 30/17=76%
4 15 30/15=100%
5 15 30/15=100%
6 15 30/15=100%
7 15 30/15=100%
8 15 30/15=100%
9 15 30/15=100%
10 14 30/14=114%

We compute the bandwidth gain against the dumb use of 30 cell times; the bandwidth gain comes from the fact that the synchronous satellite channel gives us a fixed bandwidth, giving a fixed number of cells per unit time, and we have just saved 16 cell times by use of the delay scheme. For this example, at this point no more gain is possible, since all the duplication has been eliminated. In some sense, this behaves like a compression scheme. The similarity algorithm increases the probability that these overlaps will occur - the ideal situation is we are waiting long enough so that the scheduled broadcast cell satisfies almost all requests for that cell within a significant time intervals (say several milliseconds).

## Basic Filtering of Programs

The data distribution system of the present invention automatically constructs both a target profile for each target object in the electronic media, as well as a "subscriber target profile interest summary" for each subscriber, which subscriber target profile interest summary describes the subscriber's interest level in various types of target objects. The system then evaluates the target profiles against the subscribers' target profile interest summaries to generate a subscriber-customized rank ordered listing of target objects most likely to be of interest to each subscriber so that the subscriber can select from among these potentially relevant target objects, which were automatically selected by this system from the plethora of target objects available on the electronic media.

Because people have multiple interests, a target profile interest summary for a single subscriber must represent multiple areas of interest, for example, by consisting of a set of individual search profiles, each of which identifies one of the subscriber's areas of interest. Each subscriber is presented with those target objects whose profiles most closely match the subscriber's interests as described by the subscriber's target profile interest summary. Subscribers' target profile interest summaries are automatically updated on a continuing basis to reflect each subscriber's changing interests. In addition, target objects can be grouped into clusters based on their similarity to each other, for example, based on similarity of their topics in the case where the target objects are published programs, and menus automatically generated for each cluster of target objects to allow subscribers to navigate throughout the clusters and manually locate target objects of interest. For reasons of confidentiality and privacy, a particular subscriber may not wish to make public all of the interests recorded in the subscriber's target profile interest summary, particularly when these interests are determined by the subscriber's purchasing patterns. The subscriber may desire that all or part of the target profile interest summary be kept confidential. It is therefore necessary that data in a subscriber's target profile interest summary be protected from unwanted disclosure except with the subscriber's agreement, which may entail processing at least part of the agreement matrix in the subscriber terminal adapter. At the same time, the subscriber's target profile interest summaries must be accessible to the relevant servers that perform the matching of target objects to the subscribers, if the benefit of this matching is desired by both providers and consumers of the target objects.

In the preferred embodiment of the invention, the data distribution system uses a fundamental methodology for accurately and efficiently matching subscribers and target objects by automatically calculating, using and updating profile information that describes both the subscribers' interests and the target objects' characteristics. The target objects are typically programs, and their properties are stored, and/or represented and /or denoted on the electronic media as (digital) data. The information delivery process in the preferred embodiment is based on determining the similarity between a profile for the target object and the profiles of target objects for which the subscriber (or a similar subscriber) has provided positive feedback in the past. The individual data that describe a target object and constitute the target object's profile are herein termed "attributes" of the target object. Attributes may include, but are not limited to, the following: (1) long pieces of text (a movie review, or an advertisement), (2) short pieces of text (name of a movie's director, name of town from which an advertisement was placed), (3) numeric measurements (rating given to a movie), (4) associations with other types of objects (list of actors in a movie). Any of these attributes, but especially the numeric ones, may correlate with the quality of the target object, such as measures of its popularity (how often it is accessed) or of subscriber satisfaction (number of complaints received).

Each movie has a different set of values for these attributes. This example conveniently illustrates three kinds of attributes. It is evident that they can be used to help the subscriber identify target objects (movies) of interest. For example, the subscriber might previously have rented many Parental Guidance (PG) films, and many films made in the 1970's. This generalization is useful: new films with values for one or both attributes that are numerically similar to these (such as MPAA rating of 1, release date of 1975) are judged similar to the films the subscriber already likes, and therefore of probable interest. Textual attributes are important for helping the subscriber locate desired films. For example, perhaps the subscriber has shown a past interest in films whose review text contains words like "chase," "explosion," "explosions," "hero," "gripping," and "superb." This generalization is again useful in identifying new films of interest. The TF/IDF method can be used to profile the movie descriptions, or even the closed captioning contained therein, as described below. Associative attributes record associations between the target objects in this domain, namely movies, and ancillary target objects of an entirely different sort, namely humans.

## Decomposing Complex Attributes

Although textual and associative attributes are large and complex pieces of data, for information retrieval purposes they can be decomposed into smaller, simpler numeric attributes. This means that any set of attributes can be replaced by a (usually larger) set of numeric attributes, and hence that any profile can be represented as a vector of numbers denoting the values of these numeric attributes. In particular, a textual attribute, such as the full text of a movie review, can be replaced by a collection of numeric attributes that represent scores to denote the presence and significance of the words in that text. The score of a word in a text may be defined in numerous ways. The simplest definition is that the score is the rate of the word in the text, which is computed by computing the number of times the word occurs in the text, and dividing this number by the total number of words in the text. This sort of score is often called the "term frequency" (TF) of the word. The definition of term frequency may optionally be modified to weight different portions of the text unequally: for example, any occurrence of a word in the text's title might be counted as a 3-fold or more generally k-fold occurrence (as if the title had been repeated k times within the text), in order to reflect a heuristic assumption that the words in the title are particularly important indicators of the text's content or topic.

Just as a textual attribute may be decomposed into a number of component terms (letter or word n-grams), an associative attribute may be decomposed into a number of component associations. For instance, a typical associative attribute used in profiling a movie would be a list of subscribers who have rented that movie. This list can be replaced by a collection of numeric attributes, which give the "association scores" between the movie and each of the subscribers known to the system. For example, the 165th such numeric attribute would be the association score between the movie and subscriber #165, where the association score is defined to be 1 if subscriber #165 has previously rented the movie, and 0 otherwise. In a subtler refinement, this association s core could be defined to be the degree of interest, possibly zero, that subscriber #165 exhibited in the movie, as determined by relevance feedback.

## Similarity Measures

What does it mean for two target objects to be similar? More precisely, how should one measure the degree of similarity? Many approaches are possible and any reasonable metric that can be computed over the set of target object profiles can be used, where target objects are considered to be similar if the distance between their profiles is small according to this metric. Thus, the following preferred embodiment of a target object similarity measurement system has many variations.

First, define the distance between two values of a given attribute according to whether the attribute is a numeric, associative, or textual attribute. If the attribute is numeric, then the distance between two values of the attribute is the absolute value of the difference between the two values. When necessary for clustering or other purposes, a metric that allows comparison of any two target objects (whether of the same or different sorts) can be defined as follows. If a is an attribute, then let Max(a) be an upper bound on the distance between two values of attribute a; notice that if attribute a is an associative or textual attribute, this distance is an angle determined by arccos, so that Max( a) may be chosen to be 180 degrees, while if attribute a is a numeric attribute, a sufficiently large number must be selected by the system designers. The distance between two values of attribute a is given as before in the case where both values are defined; the distance between two undefined values is taken to be zero; finally, the distance between a defined value and an undefined value is always taken to be Max(a)/2. This allows us to determine how close together two target objects are with respect to an attribute a, even if attribute a does not have a defined value for both target objects. The distance d(*,*) between two target objects with respect to their entire multi-attribute profiles is then given in terms of these individual attribute distances exactly as before. It is assumed that one attribute in such a system specifies the sort of target object ("movie", "novel", etc.), and that this attribute may be highly weighted if target objects of different sorts are considered to be very different despite any attributes they may have in common.

## Filtering: Relevance Feedback

A filtering system is a device that can search through many target objects and estimate a given subscriber's interest in each target object, so as to identify those that are of greatest interest to the subscriber. The filtering system uses relevance feed back to refine its knowledge of the subscriber's interests: whenever the filtering system identifies a target object as potentially interesting to a subscriber, the subscriber (if an on-line subscriber) provides feedback as to whether or not that target object really is of interest. Such feedback is stored long-term in summarized form, as part of a database of subscriber feedback information, and may be provided either actively or passively. In active feedback, the subscriber explicitly indicates his or her interest, for instance, on a scale of -2 (active distaste) through 0 (no special interest) to 10 (great interest). In passive feedback, the system infers the subscriber's interest from the subscriber's behavior. For example, if target objects are textual documents, the system might monitor which documents the subscriber chooses to read, or not to read, and how much time the subscriber spends reading them.

## Filtering: Determining Topical Interest Through Similarity

Relevance feedback only determines the subscriber's interest in certain target objects: namely, the target objects that the subscriber has actually had the opportunity to evaluate (whether actively or passively). For target objects that the subscriber has not yet seen, the filtering system must estimate the subscriber's interest. This estimation task is the heart of the filtering problem, and the reason that the similarity measurement is important. The subscriber can provide active and/or passive feedback to the system relating to presented programs. However, the system does not have feedback information from the subscriber for programs that have never been presented to the subscriber, such as new programs that have just been added to the broadcast schedule, or old programs that the system chose not to present to the subscriber.

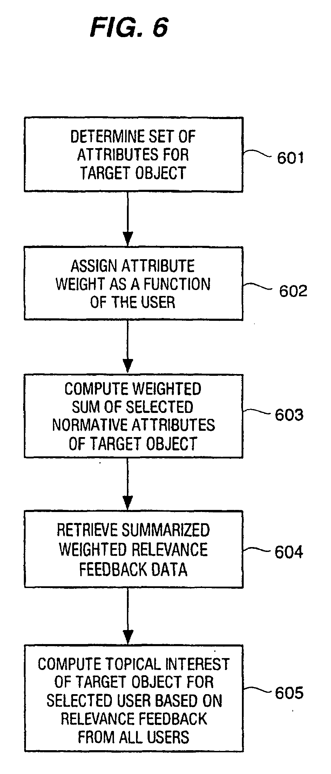

As shown in flow diagram form in Figure 6, the evaluation of the likelihood of interest in a particular target object for a specific subscriber can automatically be computed. The interest that a given target object X holds for a subscriber U is assumed to be a sum of two quantities: q(U, X), the intrinsic "quality" of X, plus f(U, X), the "topical interest" that subscribers like U have in target objects like X. For any target object X, the intrinsic quality measure q(U, X) is easily estimated at steps 601-603 directly from numeric attributes of the target object X. The computation process begins at step 601, where certain designated numeric attributes of target object X are specifically selected, which attributes by their very nature should be positively or negatively correlated with subscribers' interest. Such attributes, termed "quality attributes," have the normative property that the higher (or in some cases lower) their value, the more interesting a subscriber is expected to find them. Quality attributes of target object X may include, but are not limited to, target object X's popularity among subscribers in general, the rating a particular reviewer has given target object X, the age (time since authorship -- also known as outdatedness) of target object X, the number of vulgar words used in target object X, the price of target object X, and the amount of money that the company selling target object X has donated to the subscriber's favorite charity. At step 602, each of the selected attributes is multiplied by a positive or negative weight indicative of the strength of subscriber U's preference for those target objects that have high values for this attribute, which weight must be retrieved from a data file storing quality attribute weights for the selected subscriber. At step 603, a weighted sum of the identified weighted selected attributes is computed to determine the intrinsic quality measure q(U, X). At step 604, the summarized weighted relevance feedback data is retrieved, wherein some relevance feedback points are weighted more heavily than others and the stored relevance data can be summarized to some degree, for example by the use of search profile sets. The more difficult part of determining subscriber U's interest in target object X is to find or compute at step 605 the value of f(U, X), which denotes the topical interest that subscribers like U generally have in target objects like X. The method of determining a subscriber's interest relies on the following heuristic: when X and Y are similar target objects (have similar attributes), and U and V are similar subscribers (have similar attributes), then topical interest f(U, X) is predicted to have a similar value to the value of topical interest f(V, Y). This heuristic leads to an effective method because estimated values of the topical interest function f(*,*) are actually know n for certain arguments to that function: specifically, if subscriber V has provided a relevance-feedback rating of r(V, Y) for target object Y, then insofar as that rating represents subscriber V's true interest in target object Y, we have r(V, Y) = q(V, Y) + f(V, Y) and can estimate f(V, Y) as r(V, Y) - q(V, Y). Thus, the problem of estimating topical interest at all points becomes a problem of interpolating among these estimates of topical interest at selected points, such as the feedback estimate of f(V, Y) a s r(V, Y) - q(V, Y). This interpolation can be accomplished with any standard smoothing technique, using as input the known point estimates of the value of the topical interest function f (*, *), and determining as output a function that approximates the entire topical interest function f(*, *).

Not all point estimates of the topical interest function f(*, *) should be given equal weight as inputs to the smoothing algorithm. Since passive relevance feedback is less reliable than active relevance feedback, point estimates made from passive relevance feedback should be weighted less heavily than point estimates made from active relevance feedback, or even not used at all. In most domains, a subscriber's interests may change over time and, therefore, estimates of topical interest that derive from more recent feedback should also be weighted more heavily. A subscriber's interests may vary according to mood, so estimates of topical interest that derive from the current session should be weighted more heavily for the duration of the current session, and past estimates of topical interest made at approximately the current time of day or on the current weekday should be weighted more heavily. An estimate of topical interest f(V, Y) should be weighted more heavily if subscriber V has had more experience with target object Y. Indeed, a useful strategy is for the system to track long-term feedback for such target objects.

To effectively apply the smoothing technique, it is necessary to have a definition of the similarity distance between (U, X) and (V, Y), for any subscribers U and V and any target objects X and Y. We have already seen how to define the distance d(X, Y) between two target objects X and Y, given their attributes. We may regard a pair such as (U, X) as an extended object that bears all the attributes of target X and all the attributes of subscriber U; then the distance between (U, X) and (V, Y) may be computed in exactly the same way. This approach requires subscriber U, subscriber V, and all other subscribers to have some attributes of their own stored in the system: for example, age (numeric), social security number (textual), and list of documents previously retrieved (associative). It is these attributes that determine the notion of "similar subscribers." Thus it is desirable to generate profiles of subscribers (termed "subscriber profiles") as well as profiles of target objects (termed "target profiles"). Some attributes employed for profiling subscribers may be related to the attributes employed for profiling target objects: for example, using associative attributes, it is possible to characterize target objects such as X by the interest that various subscribers have shown in them, and simultaneously to characterize subscribers such as U by the interest that they have shown in various target objects. In addition, subscriber profiles may make use of any attributes that are useful in characterizing humans, such as those suggested in the example domain above where target objects are potential consumers. Notice that subscriber U's interest can be estimated even if subscriber U is a new subscriber or an off-line subscriber who has never provided any feedback, because the relevance feedback of subscribers whose attributes are similar to U's attributes is taken into account.

$$f(U, X) = \frac{\sum ((r(V, Y) - q(V, Y)) * g(distance((U, X) \Lambda (V, Y)))}{\sum g(distance((U, V) \Lambda (V, Y)))}$$

For some uses of filtering systems, when estimating topical interest, it is appropriate to make an additional "presumption of no topical interest" (or "bias toward zero"). To understand the usefulness of such a presumption, suppose the system needs to determine whether target object X is topically interesting to the subscriber U, but that subscribers like subscriber U have never provided feedback on target objects even remotely like target object X. The presumption of no topical interest says that if this is so, it is because subscribers like subscriber U are simply not interested in such target objects and therefore do not seek them out and interact with them. On this presumption, the system should estimate topical interest f(U, X) to be low. Formally, this example has the characteristic that (U, X) is far away from all the points (V, Y) where feedback is available. In such a case, topical interest f(U, X) is presumed to be close to zero, even if the value of the topical interest function f(*, *) is high at all the faraway surrounding points at which its value is known. When a smoothing technique is used, such a presumption of no topical interest can be introduced, if appropriate, by manipulating t he input to the smoothing technique. In addition to using observed values of the topical interest function f(*, *) as input, the trick is to also introduce fake observations of the form topical interest f(V, Y) = 0 for a lattice of points (V, Y) distributed throughout the multidimensional space. These fake observations should be given relatively low weight as inputs to the smoothing algorithm. The more strongly they are weighted, the stronger the presumption of no interest.

The following provides another simple example of an estimation technique that has a presumption of no interest. Let g be a decreasing function from non-negative real numbers to non-negative real numbers, such as $g(x) = e^x$ or $g(x) = \min(1, x^{-k})$ where k > 1. Estimate topical interest f(U, X) with the following g-weighted average:

Here the summations are over all pairs (V, Y) such that subscriber V has provided feedback r(V, Y) on target object Y, i.e., all pairs (V, Y) such that relevance feedback r(V, Y) is defined. Note that both with this technique and with conventional smoothing techniques, the estimate of the topical interest f(U, X) is not necessarily equal to r(U, X) - q(U, X ), even when r(U, X) is defined.

## Filtering: Adjusting Weights and Residue Feedback

The method described above requires the filtering system to measure distances between (subscriber, target object) pairs, such as the distance between (U, X) and (V, Y). Given the means described earlier for measuring the distance between two multi-attribute profiles, the method must therefore associate a weight with each attribute used in the profile of (subscriber, target object) pairs, that is, with each attribute used to profile either subscribers or target objects. These weights specify the relative importance of the attributes in establishing similarity or difference, and therefore, in determining how topical interest is generalized from one (subscriber, target object) pair to another. Additional weights determine which attributes of a target object contribute to the quality function q, and by how much.

It is possible and often desirable for a filtering system to store a different set of weights for each subscriber. For example, a subscriber who thinks of two-star films as having materially different topic and style from four-star films wants to assign a high weight to "number of stars" for purposes of the similarity distance measure d(*, *); this means that interest in a two-star film does not necessarily signal interest in an otherwise similar four-star film, or vice-versa. If the subscriber also agrees with the critics, and actually prefers four-star films, the subscriber also wants to assign "number of stars" a high positive weight in the determination of the quality function q. In the same way, a subscriber who dislikes vulgarity wants to assign the "vulgarity score" attribute a high negative weight in the determination of the quality function q, although the "vulgarity score" attribute does not necessarily have a high weight in determining the topical similarity of two films.

Attribute weights (of both sorts) may be set or adjusted by the system administrator or the individual subscriber, on either a temporary or a permanent basis. However, it is often desirable for the filtering system to learn attribute weights automatically, based on relevance feedback. The optimal attribute weights for a subscriber U are those that allow the most accurate prediction of subscriber U's interests. That is, with the distance measure and quality function defined by these attribute weights, subscriber U's interest in target object X, q(U, X) + f(U, X), can be accurately estimated by the techniques above. The effectiveness of a particular set of attribute weights for subscriber U can therefore be gauged by seeing how well it predicts subscriber U's known interests.

Formally, suppose that subscriber U has previously provided feedback on target objects $X_1, X_2, X_3, ... X_n$ , and that the feedback ratings are $r(U, X_1), r(U, X_2), r(U, X_3), ... r(U, X_n)$. Values of feedback ratings r(*,*) for other subscribers and other target objects may also be known. The system may use the following procedure to gauge the effectiveness of the set of attribute weights it currently stores for subscriber U: (I) For each 1 <= I <= n, use the estimation techniques to estimate $q(U, X_1) + f(U, X_i)$ from all known values of feedback ratings r. Call this estimate $a_i$. (ii) Repeat step (I), but this time make the estimate for each 1 <= I <= n without using the feedback ratings $r(U, X_j)$ as input, for any j such that the distance $d(X_i, X_j)$ is smaller than a fixed threshold. That is, estimate each $q(U, X_i) + f(U, X_i)$ from other values of feedback rating r only; in particular, do not use $r(U, X_i)$ itself. Call this estimate $b_i$. The difference $a_i - b_i$ is herein termed the "residue feedback $r_{res}(U, X_i)$ of subscriber U on target object $X_j$." (iii) Compute subscriber U's error measure, $(a_1 - b_1)^2 + (a_2 - b_2)^2 + (a_3 - b_3)^2 + ... + (a_n - b_n)^2$.

A gradient-descent or other numerical optimization method may be used to adjust subscriber U's attribute weights so that this error measure reaches a (local) minimum. This approach tends to work best if the smoothing technique used in estimation is such that the value of f(V, Y) is strongly affected by the point estimate r(V, Y) - q(V, Y) when the latter value is provided as input. Otherwise, the presence or absence of the single input feedback rating r(U, $X_i$), in steps (I)-(ii) may not make $a_i$ and $b_i$ very different from each other. A slight variation of this learning technique adjusts a single global set of at tribute weights for all subscribers, by adjusting the weights so as to minimize not a particular subscriber's error measure but rather the total error measure of all subscribers. These global weights are used as a default initial setting for a new subscriber who has not yet provided any feedback. Gradient descent can then be employed to adjust this subscriber's individual weights over time. Even when the attribute weights are chosen to minimize the error measure for subscriber U, the error measure is generally still positive, meaning that residue feedback from subscriber U has not been reduced to 0 on all target objects. It is useful to note that high residue feedback from a subscriber U on a target object X indicates that subscriber U liked target object X unexpectedly well given its profile, that is, better than the smoothing model could predict from subscriber U's opinions on target objects with similar profiles. Similarly, low residue feedback indicates that subscriber U liked target object X less than was expected. By definition, this unexplained preference or dispreference cannot be the result of topical similarity, and therefore must be regarded as an indication of the intrinsic quality of target object X. It follows that a useful quality attribute for a target object X is the average amount of residue feedback $r_{res}(V, X)$ from subscribers on that target object, averaged over all subscribers V who have provided relevance feedback on the target object. In a variation of this idea, residue feedback is never averaged indiscriminately over all subscribers to form a new attribute, but instead is smoothed to consider subscribers' similarity to each other. Recall that the quality measure q(U, X) depends on the subscriber U as well as the target object X, so that a given target object X may be perceived by different subscribers to have different quality. In this variation, as before, q(U, X) is calculated as a weighted sum of various quality attributes that are dependent only on X, but then an additional term is added, namely an estimate of $r_{res}$ (U, X) found by applying a smoothing algorithm to known values of $r_{res}$ (V, X). Here V ranges over all subscribers who have provided relevance feedback on target object X, and the smoothing algorithm is sensitive to the distances d(U, V) from each such subscriber V to subscriber U.

## Compare Present Programs' Target Profile to a Subscriber's Target Profile Interest Summary

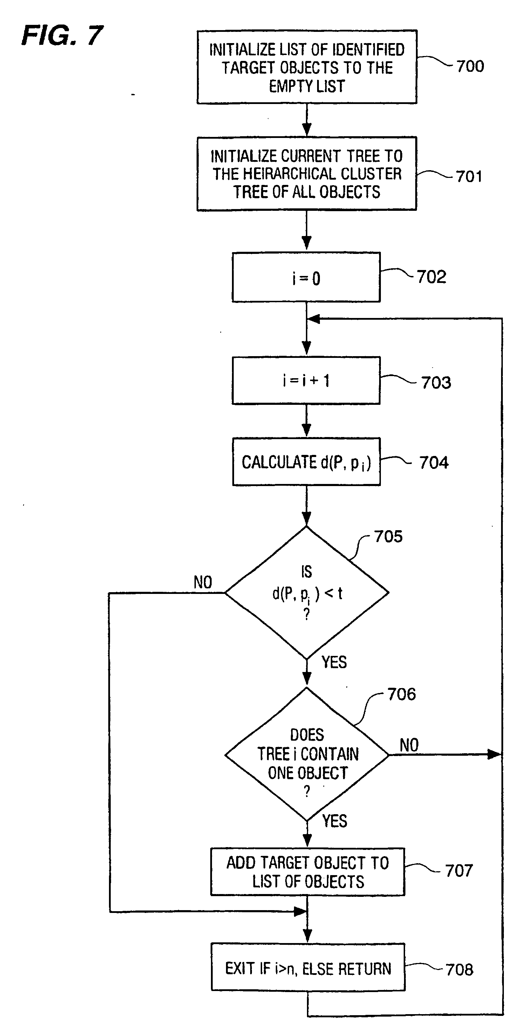

The process by which a subscriber employs this apparatus to view programs is illustrated in flow diagram form in Figure 7. At step 701, the subscriber activates the subscriber terminal adapter 112. The subscriber has a subscriber target profile interest summary stored in distribution system 100. When the subscriber requests access to programs at step 702, the profile matching software resident on either distribution system 100 or in the subscriber terminal adapter 112 sequentially considers each search profile $p_k$ from the subscriber's target profile interest summary to determine which programs are most likely of interest to the subscriber. The programs were automatically clustered into a hierarchical cluster tree at an earlier step so that the determination can be made rapidly for each subscriber. The hierarchical cluster tree serves as a decision tree for determining which programs' target profiles are most similar to search profile $p_k$: the search for relevant programs begins at the top of the tree, and at each level of the tree the branch or branches are selected which have cluster profiles closest to $p_k$. This process is recursively executed until the leaves of the tree are reached, identifying individual programs of interest to the subscriber.
A variation on this process exploits the fact that many subscribers have similar interests. Rather than carry out steps 5-9 of the above process separately for each target profile interest summary of each subscriber, it is possible to achieve added efficiency by carrying out these steps only once for each group of similar target profile interest summaries, thereby satisfying many subscribers' needs at once. In this variation, the system begins by non-hierarchically clustering all the target profile interest summaries of a large number of subscribers. For each cluster k of target profile interest summary, with cluster profile $p_k$, it locates programs with target profiles similar to $p_k$. Each located program is then identified as of interest to each subscriber who has a target profile interest summary represented in cluster k of target profile interest summaries.

## Present List of Proarams to Subscriber

Once the profile correlation step is completed for a selected subscriber or group of subscribers, at step 704 the program selection software stores a list of the identified programs for presentation to the subscriber. At a subscriber's request, the processor 406 retrieves the generated list of relevant programs and presents this list of titles of the selected programs to the subscriber, who can then select at step 705 any program for viewing. The list of program titles is sorted according to the degree of similarity of the program's target profile to the most similar subscriber target profile interest summary.

## Monitor Which Programs Are Viewed

The processor 406, at step 707, monitors which programs the subscriber views, keeping track of how much time is spent viewing the program. This information can be combined to measure the depth of the subscriber's interest in the program, yielding a passive relevance feedback score, as described earlier. The exact details depend on the length and nature of the programs being searched. The computed measure of program attractiveness can then be used as a weighting function to adjust the subscriber's target profile interest summary to thereby more accurately reflect the subscriber's dynamically changing interests.

## Update Subscriber Profiles

Updating of a subscriber's target profile interest summary can be done at step 708 using the method described in copending U.S. Patent Application Serial No. 08/346,425 (S.N. US 5,758,257). When an program is viewed, the distribution system 100 shifts the target profile interest summary slightly in the direction of the target profiles of those nearby programs for which the computed measure of program attractiveness was high. Given a target profile interest summary with attributes $u_{ik}$ from a subscriber's target profile interest summary set, and a set of J programs available with attributes $d_{jk}$ (assumed correct for now), where I indexes subscribers, j indexes programs, and k indexes attributes, subscriber I would be predicted to pick a set of P distinct programs to minimize the sum of $d(u_i, b_j)$ over the chosen programs j. The subscriber's desired attributes $u_{ik}$ and an program's attributes $d_{jk}$ would be some form of word frequencies such as TF/IDF, such as from program descriptions or the closed caption text of the program, and potentially other attributes such as the source, and length of the program, while $d(u_i, d_j)$ is the distance between these two attribute vectors (profiles) using the similarity measure described above. If the subscriber picks a different set of P programs than was predicted, the processor 406 should try to adjust u and/or d to more accurately predict the programs the subscriber selected. In particular, $u_i$ and/or $d_j$ should be shifted to increase their similarity if the subscriber was predicted not to select program j but did select it, and perhaps also to decrease their similarity if the subscriber was predicted to select program j but did not. A preferred method is to shift u for each wrong prediction that the subscriber will not select program j, using the formula: $u_{ik}' = u_{ik} - e(u_{ik} \, d_{jk})$.

Here u, is chosen to be the target profile interest summary from subscriber I's target profile interest summary set that is closest to target profile. If e is positive, this adjustment increases the match between subscriber I's target profile interest summary set and the target profiles of the programs subscriber I actually selects, by making $u_i$ closer to $d_j$ for the case where the algorithm failed to predict an program that the viewer selected. The size of e determines how many example programs one must see to change the target profile interest summary substantially. If e is too large, the algorithm becomes unstable, but for sufficiently small e, it drives u to its correct value. In general, e should be proportional to the measure of program attractiveness; for example, it should be relatively high if subscriber I spends a long time reading program j. One could in theory also use the above formula to decrease the match in the case where the algorithm predicted an program that the subscriber did not read, by making e negative in that case. However, there is no guarantee that u will move in the correct direction in that case. One can also shift the attribute weights w, of subscriber I by using a similar algorithm: $w_{ik}' = (w_{ik} - e|u_{ik} - d_{jk}|) / \Sigma_k (w_{ik} - el \, u_{ik} - d_{jk}|)$.

This is particularly important if one is combining word frequencies with other attributes. As before, this increases the match if e is positive -- for the case where the algorithm failed to predict an program that the subscriber read, this time by decreasing t he weights on those characteristics for which the subscriber's target profile $u_i$ differs from the program's profile $d_j$. Again, the size of e determines how many example programs one must see to replace what was originally believed. Unlike the procedure for adjusting u, one also make use of the fact that the above algorithm decreases the match if e is negative -- for the case where the algorithm predicted an program that the subscriber did not read. The denominator of the expression prevents weights from shrinking to zero over time by renormalizing the modified weights $w_i'$ so that they sum to one. Both u and w can be adjusted for each program accessed. When e is small, as it should be, there is no conflict between the two parts of the algorithm. The selected subscriber's target profile interest summary set is updated at step 708.

## Additional Applications

The above noted application of the data distribution system of the present invention to a cable television system is not intended to limit the scope of the invention. The basic concept disclosed herein is applicable to many applications which entail the use of a subscriber terminal device which has limited data storage capacity and there is limited bandwidth available to transmit data, yet the subscriber terminal device also has access to a plethora of information. A number of such applications are noted herein to illustrate some significant classes of these further uses of this system.

1. Enhanced Interactive Shopping and Product Demonstration - The present data distribution system allows the use of descriptive information, the principle of locality of reference, and interest-based selection to reduce the memory utilized in a subscriber terminal device. Since the key features of the data distribution system include the automated determination of user interests and pre-fetching, a natural application of the data distribution system is as an enhancement of the present home-shopping technologies, with an interactive menu-based catalog perusal. The interest-based selection features allow merchants to generate user customized catalogs based upon past selections. The data distribution system disclosed can be used at many levels, from choosing particular presentations to selecting "channels" where suitable product information is available. In addition, many manufacturers of power tools, appliances and kitchen apparatus provide video demonstrations of the devices being used, which encourage users to use the device effectively, and encourage non-owners to become purchasers. The data distribution system allows descriptions of the devices to be provided to a large population of potential customers who have an interest in the device.

2. A Handheld Travel Guide Assistant - The present data distribution system can be used to download (via the Web) information relevant to travelers, which information is identified by the user or can be automatically identified on a location basis by GPS (or a local RF signal). This includes not only road and travel conditions but also the location of fuel, restaurants, lodging, points of interest and their associated times of operation. Some local retail stores may also wish to customize catalog information about their products, services and special promotions, or they may wish to provide a comprehensive web based catalog with limited geographically specific off-line selections. Thus, the presently described similarity measures may also be used to selectively present the product selections which are most interesting to the user for any given local catalog. This system can provide mapping information in a multi-channel environment. Consider a 5 channel system, which provides a channel of mapping information, and 4 channels of "zoomed" mapping information at a factor of 2X magnification. The profile information could be used to detect when particular features are likely to attract the viewer's attention and prefetch mapping information based on these characteristics (e.g., bodies of water, buildings, airports, etc.). With multiple channels, it is easy to see that mapping information could be provided in a multiplicity of directions as well as magnifications. In this system, memory is optimized by selectively downloading information details of sites relevant to the user's interest. Many travel advertisements use video clips or images to show the visual features of local interests. The customization of these presentations based on user interest can ensure a more rapid and insightful selection of destinations, benefitting both the travel industry and customer. This scheme can be used with either a channel selection, indexing or customization service. Furthermore, museums tend to be highly visual, and yet have descriptive information or abstracts for the exhibits for visitors seeking more information about topics and exhibits. The data distribution system disclosed in this application can allow customized museum tours, can develop menus of appropriate selections from a multi-channel environment, or can aid with real-time "channel-surfing" of channels based on user interest.

3. The data distribution system can decide which selections to download and, of the downloaded selections, also decide what granularity of detail is recommended based on the system predicted degree of user interest. Thus, the data distribution system can either download: a) The full video, b) A still graphic, c) A textual description, d) A summary of the textual description, e) The selection title from a directory or menu, f) Do not download the item at all.

4. Real-Estate Previews - Real estate is one of the biggest purchases made by most consumers in their lifetimes, and yet the information delivery system is primitive in the extreme. In particular, single black and white photographs with simple textual descriptions are used to attract customers to a real estate agency or private seller, who then provides an expanded data sheet and maybe a visit to the property if there is interest. This is time-consuming, and when the house is owner-occupied, potentially inconvenient for potential buyers, the seller and the realtor. The data distribution system allows improved selection and presentation of information to potential buyers, including potentially video clips and an increased library of photographs. Depending on the perspective of buyer, realtor or seller, the data distribution system more effectively pre-screens houses, reduces the cost of selling and time devoted to seeing inappropriate houses, and saves the seller a potentially large amount of inconvenience.

5. Smart Card Promotional Discounts - As with today's handheld pager technology, it is possible to build simple receive-only devices at lower cost which embody the concepts disclosed here. In particular, it is a simple technical matter to provide (see "A Distributed Location System for the Active Office," A. Harter and A. Hopper, IEEE Network, Jan./Feb. 1994, pp. 62-70) a low-bandwidth beacon indicating identity, and to couple this with a receiver capable of receiving at higher rates from a broadcast source, e.g., satellite, broadcast antenna or base station, or the like. If viewed as one aspect of future "smart card" systems, the present invention would allow the downloading of a variety of information useful to the user into such a "smart card" device. In particular, coupon-like electronic credits could be loaded into a smart card to be drawn upon when purchases are made. In this way, the functions of direct-mail advertising could be replicated in the electronic broadcast facility of the present invention. Purchasing records maintained by the "smart card" device form part of the user profile for this application, suggesting choices of appropriate electronic coupons to be downloaded from the broadcast device. The memory-reduction technology of the present invention has significant cost and performance advantages for this environment.

## Summary

The data distribution system automatically constructs both a target profile for each target object (program) that is broadcast, as well as a "target profile interest summary" for each subscriber, which target profile interest summary describes the subscriber's interest level in various types of target objects. The system then evaluates the target profiles against the subscribers' target profile interest summaries to generate a subscriber-customized rank ordered listing of target objects most likely to be of interest to each subscriber, so that the subscriber can select from among these potentially relevant target objects, which were automatically selected by this system from the plethora of target objects available on the data distribution system. This architecture offers several advantages. First, technology upgrades can be done in the core of the data distribution network, without requiring access to subscriber terminal equipment. Second, there are significant savings in data storage which results from multiplexing this directory information across populations of subscribers. Third, even an extremely limited amount of memory in the terminal adapter can handle complex information streams and subscriber interests with complete generality.

**Claims**

1. A method of optimizing communication, comprising:

   (a) providing at least one data source of a plurality of target object data items;

   (b) providing a plurality of data terminals, each assigned to a particular one of a plurality of users;

   (c) interconnecting said at least one data source and said plurality of data terminals over a communications medium, including a downlink channel;

   (d) automatically generating user interest profile data for each of said plurality of users which indicates which particular ones of said plurality of target object data items are likely to be of interest to each of said plurality of users;

   (e) searching, utilizing said user interest profile data, said plurality of target object data items to identify for. each of said plurality of users at least one of said plurality of target object data items which most likely corresponds to said user interest profile data;

   (f) delivering to said plurality of data terminals particular ones of said plurality of target object data items prioritized in a manner based upon the results of said step of searching;

   (g) wherein during said step of delivering, at least a portion of said target object data items are predictively prefetched utilizing at least said user interest profile data, and are intermixed with on-demand data; and

   (h) wherein predictively prefetched target object data items are delivered over said downlink channel utilizing underutilized slots or bandwidth to preemptively reduce future demands for bandwidth.

2. A method according to claim 1, wherein said plurality of target object data items comprise at least one of:

   (1) multimedia information;
   (2) data items which are divided into a plurality of information segments;
   (3) internet links; and
   (4) video content;
   (5) MPEG-compressed streams of video.

3. A method according to claim 1 or 2, wherein said data terminals comprise at least one of:

   (1) terminal adaptors;
   (2) network interface devices;
   (3) mobile devices;
   (4) personal digital assistants;
   (5) network computers;
   (6) personal computers; and
   (7) set top boxes.

4. A method according to claim 1, 2 or 3 wherein said communications medium comprises at least one of:

   (1) a cable television system;
   (2) a digital broadcast system; and
   (3) a video-on-demand system.

5. A method according to claim 1, 2, 3 or 4 wherein said user interest profile data is maintained in said data terminals.

6. A method according to any one of the preceding claims, further comprising:

   (i) providing a processor in each of said data terminals; and

(j) utilizing said processor to select a plurality of data items as corresponding to said user interest profile data during said step of searching, and to assign data items to virtual channels for consideration by said users.

7. A method according to claim 6, wherein during said step of searching said processor compares directory information associated with each of said plurality of target data items to said user interest profile data to determine whether there is correspondence.

8. A method according to any one of claim 1 to 5, further comprising:

(i) collecting target data use information, such as viewing habit data, and transmitting it through said communications medium for use in refining said user interest profile data.

9. A method according to any one of claim 1 to 5, further comprising:

(i) providing at said at least one data source a directory of descriptive information for said plurality of target object data items; and

(j) providing in a preselected manner for each of said plurality of users a portion of said directory of descriptive information which best matches the user interest profile of each of said plurality of users.

10. A method according to any one of claim 1 to 5, further comprising:

(i) dividing each of said plurality of target data items into information segments; and

(j) during said step of delivering, transmitting said plurality of target data items in transmissions which utilize said information segments in order to reduce the effective bandwidth required for service.

11. A method according to claim 10, wherein said information segments of said plurality of target data items are prefetched based upon known location data relative to said plurality of users.

12. A method according to any one of the preceding claims, further comprising the steps of:

(i) providing a directory of information related to said plurality of target object data types;

(ii) automatically generating a user-specific directory of said plurality of target objects for each of said plurality of users, utilizing said user interest profile data, which includes only segments of said directory of information which are pertinent to that particular user; and

(iii) providing in a preselected manner for each of said plurality of users a portion of said directory of descriptive information which best matches the user interest profile of each of said plurality of users.

13. A method according to claim 12, further comprising:

(i) providing updated directories of information related to said plurality of target data items;
(j) instructing particular affected ones of said plurality of data terminals to delete user-specific directories;
(k) upon detection of a request for directory information at a particular one of said plurality of data terminals, transmitting a new, updated user-specific directory to said particular one of said plurality of data terminals.

14. A method according to claim 13, further comprising:

(l) periodically sending time-of-day and date information to said plurality of data terminals to allow accurate scheduling and transmission.

15. A method according to any of the preceding claims, further comprising:

(i) providing an artificial delay in said step of delivering in order to obtain bandwidth savings.

16. A method according to any of the preceding claims; further comprising:

(i) receiving relevance feedback from particular ones of said plurality of users which indicates whether or not particular ones of said plurality of target data objects are really of interest.

**17.** A method according to any of the preceding claims, further comprising:

(i) providing a predictive model for each of said plurality of users;

(j) wherein said model includes a number of attributes, each representing a measure of relevance for each of said plurality of users;

(k) receiving relevance feedback from said plurality of users; and

(l) adjusting said model over time as relevance feedback is received.

**18.** A method according to claim 17, further comprising:

(m) wherein said relevance feedback comprises at least one of:

(1) active feedback;
(2) passive feedback;
(3) residue feedback, which corresponds to an estimate of relevance in the absence of active feedback;
(4) an error measurement, which corresponds to a difference between predicted relevance and actual use.

**19.** A method according to claim 17 or 18, further comprising:

(m) wherein said attributes of said model include at least one of the following:

(1) term frequency, which is a measure of the frequency of occurrence of a particular term in a text; and
(2) association scores, which is a measure of a known degree of interest in particular target object data items;
(3) a numeric indicator of relevance determined for a particular attribute;
(4) a numeric indicator of relevance determined for a particular attribute from a cluster of attributes.

**Patentansprüche**

**1.** Verfahren zum Optimieren von Kommunikation, das umfasst:

a) Bereitstellen wenigstens einer Datenquelle einer Vielzahl von Zielobjekt-Datenelementen;

b) Bereitstellen einer Vielzahl von Datenendgeräten, die jeweils einem bestimmten einer Vielzahl von Nutzern zugeordnet sind;

c) Verbinden der wenigstens einen Datenquelle und der Vielzahl von Datenendgeräten über ein Kommunikationsmedium, das einen Abwärtsverbindungs-Kanal enthält;

d) automatisches Erzeugen von Nutzerinteressenprofil-Daten für jeden der Vielzahl von Nutzern, die anzeigen, welche bestimmten der Vielzahl von Zielobjekt-Datenelementen wahrscheinlich für jeden der Vielzahl von Nutzem von Interesse sind;

e) unter Verwendung der Nutzerinteressenprofil-Daten Durchsuchen der Vielzahl von Zielobjekt-Datenelementen, um für jeden der Vielzahl von Nutzem wenigstens eines der Vielzahl von Zielobjekt-Datenelementen zu identifizieren, das am wahrscheinlichsten den Nutzerinteressenprofil-Daten entspricht;

f) Liefern bestimmter der Vielzahl von Zielobjekt-Datenelementen, die auf Basis der Ergebnisse des Schrittes des Durchsuchens priorisiert werden, zu der Vielzahl von Datenendgeräten;

g) wobei beim Schritt des Liefems wenigstens ein Teil der Zielobjekt-Datenelemente unter Verwendung wenigstens der Nutzerinteressenprofil-Daten prädiktiv vorabgerufen wird und mit On-Demand-Daten gemischt wird; und

h) wobei prädiktiv vorabgerufene Zielobjekt-Datenelemente über den Abwärtsverbindungs-Kanal unter Verwendung unterausgelasteter Zeitschlitze oder Bandbreite geliefert werden, um präemptiv zukünftigen Bedarf an Bandbreite zu verringern.

2. Verfahren nach Anspruch 1, wobei die Vielzahl von Zielobjekt-Datenelementen wenigstens eines der folgenden Elemente umfassen:

1. Multimedia-Informationen;

2. Datenelemente, die in eine Vielzahl von Informationssegmenten aufgeteilt sind;

3. Internet-Links; und

4. Video-Inhalt;

5. MPEG-komprimierte Video-Streams.

3. Verfahren nach Anspruch 1 oder 2, wobei die Datenendgeräte wenigstens eine der folgenden Einrichtungen umfassen:

1. Terminaladapter:

2. Netzwerk-Schnittstellenvorrichtungen;

3. Mobile Vorrichtungen;

4. PDA;

5. Netzwerk-Computer;

6. Personalcomputer; und

7. Set-Top-Boxen.

4. Verfahren nach Anspruch 1, 2 oder 3, wobei das Kommunikationsmedium wenigstens eines der folgenden Systeme umfasst:

1. ein Kabelfernsehsystem;

2. ein digitales Rundfunksystem; und

3. ein Video-On-Demand-System.

5. Verfahren nach Anspruch 1, 2, 3 oder 4, wobei die Nutzerinteressenprofil-Daten in den Daten-Endgeräten gehalten werden.

6. Verfahren nach einem der vorangehenden Ansprüche, das des Weiteren umfasst:

i) Bereitstellen eines Prozessors in jedem der Daten-Endgeräte; und

j) Nutzen des Prozessors, um während des Schrittes des Durchsuchens eine Vielzahl von Datenelementen als den Nutzerinteressenprofil-Daten entsprechend auszuwählen und Datenelemente virtuellen Kanälen zur Betrachtung durch die Nutzer zuzuordnen.

7. Verfahren nach Anspruch 6, wobei während des Schrittes des Durchsuchens der Prozessor Verzeichnisinformationen, die mit jedem der Vielzahl von Zieldatenelementen verbunden sind, mit Nutzerinteressenprofil-Daten vergleicht, um zu ermitteln, ob Entsprechung vorliegt.

**8.** Verfahren nach einem der Ansprüche 1 bis 5, das des Weiteren umfasst:

i) Sammeln von Zieldaten-Nutzungsinformationen, so beispielsweise Sehgewohnheits-Daten, und Übertragen derselben über das Kommunikationsmedium zur Nutzung bei der Verbesserung der Nutzerinteressenprofil-Daten.

**9.** Verfahren nach einem der Ansprüche 1 bis 5, das des Weiteren umfasst:

i) Bereitstellen eines Verzeichnisses beschreibender Informationen für die Vielzahl von Zielobjekt-Datenelementen an der wenigstens einen Datenquelle; und

j) auf vorgewählte Weise Bereitstellen eines Teils des Verzeichnisses beschreibender Informationen, der am Besten dem Nutzerinteressenprofil jedes der Vielzahl von Nutzem entspricht, für jeden der Vielzahl von Nutzem.

**10.** Verfahren nach einem der Ansprüche 1 bis 5, das des Weiteren umfasst:

i) Unterteilen jedes der Vielzahl von Zieldatenelementen in Informationssegmente; und

j) während des Schrittes des Liefems Übertragen der Vielzahl von Zieldatenelementen in Übertragungsvorgängen, die die Informationssegmente nutzen, um die effektive Bandbreite zu verringern, die für den Betrieb erforderlich ist.

**11.** Verfahren nach Anspruch 10, wobei die Informationssegmente der Vielzahl von Zieldatenelementen auf Basis bekannter Standortdaten in Bezug auf die Vielzahl von Nutzern vorabgerufen werden.

**12.** Verfahren nach einem der vorangehenden Ansprüche, das des Weiteren die folgenden Schritte umfasst:

I) Bereitstellen eines Verzeichnisses von Informationen, die sich auf die Vielzahl von Zielobjektdatentypen beziehen;

II) automatisches Erzeugen eines nutzerspezifischen Verzeichnisses der Vielzahl von Zielobjekten für jeden der Vielzahl von Nutzern unter Verwendung der Nutzerinteressenprofil-Daten, das nur Segmente des Verzeichnisses von Informationen enthält, die für den speziellen Nutzer relevant sind; und

III) auf vorgewählte Weise Bereitstellen eines Teils des Verzeichnisses beschreibender Informationen, der am Besten dem Nutzerinteressenprofil jedes der Vielzahl von Nutzern entspricht, für jeden der Vielzahl von Nutzern.

**13.** Verfahren nach Anspruch 12, das des Weiteren umfasst:

i) Bereitstellen aktualisierter Verzeichnisse von Informationen, die sich auf die Vielzahl von Zieldatenelementen beziehen;

j) Anweisen bestimmter betroffener der Vielzahl von Datenendgeräten, nutzerspezifische Verzeichnisse zu löschen;

k) beim Erfassen einer Anfrage nach Verzeichnisinformationen an einem bestimmten der Vielzahl von Datenendgeräten Übermitteln eines neuen aktualisierten nutzerspezifischen Verzeichnisses zu dem bestimmten der Vielzahl von Datenendgeräten.

**14.** Verfahren nach Anspruch 13, das des Weiteren umfasst:

I) periodisches Senden von Tageszeit- und Datumsinformationen zu der Vielzahl von Datenendgeräten, um genaue Planung und Übertragung zu ermöglichen.

**15.** Verfahren nach einem der vorangehenden Ansprüche, das des Weiteren umfasst:

i) Bereitstellen einer künstlichen Verzögerung beim Schritt des Lieferns, um Bandbreiteneinsparungen zu erzielen.

**16.** Verfahren nach einem der vorangehenden Ansprüche, das des Weiteren umfasst:

l) Empfangen von Relevanz-Rückmeldung von bestimmten der Vielzahl von Nutzern, die anzeigt, ob bestimmte der Vielzahl von Zieldatenobjekten tatsächlich von Interesse sind oder nicht.

**17.** Verfahren nach einem der vorangehenden Ansprüche, das des Weiteren umfasst:

i) Bereitstellen eines prädiktiven Modells für jeden der Vielzahl von Nutzern;

j) wobei das Modell eine Anzahl von Attributen enthält, die jeweils ein Maß der Relevanz für jeden der Vielzahl von Nutzern darstellen;

k) Empfangen von Relevanz-Rückmeldung von der Vielzahl von Nutzern; und

l) Anpassen des Modells mit der Zeit, wenn Relevanz-Rückmeldung empfangen wird.

**18.** Verfahren nach Anspruch 17, das des Weiteren umfasst:

m) dass die Relevanz-Rückmeldung wenigstens eines der folgenden Verfahren umfasst:

1. aktive Rückmeldung

2. passive Rückmeldung

3. Restrückmeldung (residue feedback), die einem Schätzwert der Relevanz beim Nichtvorhandensein aktiver Rückmeldung entspricht;

4. ein Fehlermaß, das einem Unterschied zwischen vorhergesagter Relevanz und tatsächlicher Nutzung entspricht.

**19.** Verfahren nach Anspruch 17 oder 18, das des Weiteren umfasst:

m) dass die Attribute des Modells wenigstens eines der folgenden Elemente enthalten:

1. Begriffshäufigkeit, die ein Maß der Häufigkeit des Auftretens eines bestimmten Begriffs in einem Text ist; und

2. Beziehungs-Werte, die ein Maß eines bekannten Grades des Interesses an bestimmten Zielobjekt-Datenelementen sind;

3. einen numerischen indikator der Relevanz, der für ein bestimmtes Attribut ermittelt wird;

4. einen numerischen Indikator der Relevanz, der für ein bestimmtes Attribut aus einer Gruppe von Attributen ermittelt wird.

**Revendications**

**1.** Procédé pour optimiser une communication, consistant à :

(a) prévoir au moins une source de données d'une pluralité d'éléments de données objets cibles;
(b) prévoir une pluralité de terminaux de transmission de données, affectés chacun à l'un particulier d'une pluralité d'utilisateurs;

(c) interconnecter au moins une source de données et ladite pluralité de terminaux de transmission de données par l'intermédiaire d'un milieu de communication incluant un canal de liaison descendante;

(d) produire automatiquement des données de profil intéressant l'utilisateur pour chacun de ladite pluralité d'utili-, sateurs, qui indiquent quels éléments de données d'objets cibles particuliers faisant partie de ladite pluralité d'éléments de données d'objets cibles, sont susceptibles de présenter un intérêt pour chacun de ladite pluralité d'utilisateurs;

(e) rechercher, en utilisant lesdites données de profil intéressant l'utilisateur, ladite pluralité d'éléments de données d'objets cibles pour identifier chacun de ladite pluralité d'utilisateurs au moins l'un de ladite pluralité d'éléments de données d'objets cibles, qui correspond de la manière la plus probable auxdites données de profil intéressant l'utilisateur;

(f) délivrer à ladite pluralité de terminaux de transmission de données, des éléments particuliers parmi ladite pluralité d'éléments d'objets cibles affectés d'une priorité d'une manière basée sur les résultats de ladite étape de recherche;

(g) selon lequel pendant ladite étape de délivrance, au moins une partie desdits éléments de données d'objets cibles sont préalablement extraits de façon prédictive en utilisant au moins lesdites données de profil intéressant l'utilisateur, et sont mélangés à des données obtenues sur demande; et

(h) selon lequel les éléments de données d'objets cibles pré-extraits de façon prédictive sont délivrés par l'intermédiaire dudit canal de liaison descendante en utilisant des créneaux sous-utilisés ou une largeur de bande sous-utilisée pour réduire de façon supplémentaire, à titre de précautions, des demandes concernant la largeur de bande.

2. Procédé selon la revendication 1, dans lequel ladite pluralité d'éléments de données d'objets cibles comprennent au moins l'un de :

(1) une information multimédia;
(2) des éléments de données qui sont divisés en une pluralité de segments d'information;
(3) des liaisons Internet; et
(4) un contenu vidéo;
(5) des flux de vidéo comprimés selon le système MPEG.

3. Procédé selon la revendication 1 ou 2, selon lequel lesdits terminaux de transmission de données comprennent au moins l'un de :

(1) des adaptateurs de terminaux;
(2) des dispositifs d'interface de liaison au réseau;
(3) des dispositifs mobiles;
(4) des assistants numériques personnels;
(5) des ordinateurs de réseau;
(6) des ordinateurs personnels; et
(7) des périphériques WebTV.

4. Procédé selon la revendication 1, 2 ou 3, dans lequel ledit milieu de communication comprend au moins l'un de :

(1) un système de télévision par câble;
(2) un système de diffusion numérique; et
(3) un système vidéo à la demande.

5. Procédé selon la revendication 1, 2, 3 ou 4, selon lequel lesdites données de profil intéressant l'utilisateur sont conservées dans lesdits terminaux de transmission de données.

6. Procédé selon l'une quelconque des revendications précédentes, comprenant en outre :

(i) le fait de prévoir un processeur dans chacun desdits terminaux de transmission de données; et
(j) l'utilisation dudit processeur pour sélectionner une pluralité d'éléments de données comme correspondant auxdites données de profil intéressant l'utilisateur pendant ladite étape de recherche, et affecter des éléments de données à des canaux virtuels pour leur prise en considération par lesdits utilisateurs.

7. Procédé selon la revendication 6, selon lequel pendant ladite étape de recherche, ledit processeur compare une information de répertoire associée à chacun de ladite pluralité d'éléments de données cibles, auxdites données de profil intéressant l'utilisateur pour déterminer s'il existe une correspondance.

**8.** Procédé selon l'une quelconque des revendications 1 à 5, comprenant en outre :

(i) la collecte d'informations d'utilisation de données cibles, comme par exemple des données d'habitude d'observation et leur transmission par ledit milieu de communication pour leur utilisation dans l'affinage desdites données de profil intéressant l'utilisateur.

**9.** Procédé selon l'une quelconque des revendications 1 à 5, comprenant en outre :

(i) la délivrance, dans ladite au moins une source de données, d'un répertoire d'informations descriptives pour ladite pluralité d'éléments de données d'objets cibles; et
(j) la fourniture, d'une manière présélectionnée, pour chacun de ladite pluralité d'utilisateurs, d'une partie dudit répertoire d'informations descriptives, qui est le mieux adapté au profil intéressant l'utilisateur de chacun de ladite pluralité d'utilisateurs.

**10.** Procédé selon l'une quelconque des revendications 1 à 5, comprenant en outre :

(i) la division de chacun de ladite pluralité d'éléments de données cibles en des segments d'informations; et
(j) pendant ladite étape de délivrance, la transmission de ladite pluralité d'éléments de données cibles dans des transmissions qui utilisent lesdits segments d'informations pour réduire la largeur de bande effective requise pour le service.

**11.** Procédé selon la revendication 10, selon lequel lesdits segments d'informations de ladite pluralité d'éléments de données cibles sont préextraits sur la base de données d'emplacement connues concernant ladite pluralité d'utilisateurs.

**12.** Procédé selon l'une quelconque des revendications précédentes, comprenant en outre les étapes consistant à :

(i) prévoir un répertoire d'informations associé à ladite pluralité de type de données d'objets cibles;
(ii) produire automatiquement un répertoire, spécifique à l'utilisateur, de ladite pluralité d'objets cibles pour chacun de ladite pluralité d'utilisateurs, en utilisant lesdites données de profil intéressant l'utilisateur, qui incluent uniquement des segments dudit répertoire d'informations, qui sont pertinentes pour cet utilisateur particulier; et
(iii) prévoir d'une manière présélectionnée pour chacun de ladite pluralité d'utilisateurs une partie dudit répertoire d'informations descriptives, qui s'adapte le mieux au profil intéressant l'utilisateur de chacun de ladite pluralité d'utilisateurs.

**13.** Procédé selon la revendication 12, comprenant en outre :

(i) la fourniture de répertoire mis à jour d'informations associées à ladite pluralité d'éléments de données cibles;
(j) la commande de terminaux particuliers affectés parmi ladite pluralité de terminaux de transmission de données pour supprimer des répertoires spécifiques aux utilisateurs;
(k) lors de la détection d'une demande d'informations de répertoire dans l'un particulier de ladite pluralité de terminaux de transmission de données, la transmission d'un nouveau répertoire mis à jour, spécifique à l'utilisateur, audit terminal particulier faisant partie de ladite pluralité de terminaux de transmission de données.

**14.** Procédé selon la revendication 13, comprenant en outre :

(l) édition périodique d'informations concernant l'heure de la journée et la date à ladite pluralité de terminaux de transmission de données pour permettre une programmation et une transmission précises.

**15.** Procédé selon l'une quelconque des revendications précédentes, comprenant en outre :

(i) l'application d'un retard artificiel lors de ladite étape de délivrance pour réaliser des économies sur la largeur de bande.

**16.** Procédé selon l'une quelconque des revendications précédentes, comprenant en outre :

(i) la réception d'un retour de pertinence pour des utilisateurs particuliers faisant partie de ladite pluralité d'utilisateurs, qui indique si des objets particuliers dans ladite pluralité d'objets de données cibles présentent ou non réellement un intérêt.

**17.** Procédé selon l'une quelconque des revendications précédentes, comprenant en outre :

(i) la fourniture d'un modèle prédictif pour chacun de ladite pluralité d'utilisateurs;
(j) ledit modèle incluant un nombre d'attributs, dont chacun présente une mesure de la pertinence pour chacun de ladite pluralité d'utilisateurs;
(k) la réception d'un retour de pertinence à partir de ladite pluralité d'utilisateurs; et
(l) l'ajustement dudit modèle dans le temps en tant que retour de pertinence lorsque le retour de pertinence est reçu.

**18.** Procédé selon la revendication 17, dans lequel :

(m) ledit retour de pertinence comprend au moins l'un de :

(1) retour actif;
(2) retour passif;
(3) retour de résidu, qui correspond à une estimation de la pertinence en l'absence d'un retour actif;
(4) une mesure d'erreur, qui correspond à une différence entre la pertinence prédite et l'utilisation réelle.

**19.** Procédé selon la revendication 17 ou 18, dans lequel en outre :

(m) lesdits attributs dudit modèle incluent au moins l'un des suivants :

(1) une fréquence d'un terme, qui est une mesure de la fréquence d'apparition d'un terme particulier dans un texte; et
(2) des scores associés, qui sont une mesure d'un degré connu d'intérêt dans des éléments de données objets cibles;
(3) un indicateur numérique de la pertinence déterminée pour un attribut particulier;
(4) un indicateur numérique de la pertinence déterminée pour un attribut à partir d'un groupe d'attributs.

**FIG. 1**

N

112

110

106

SYSTEM
CONTROLLER

108

100

DISTRIBUTION
SYSTEM

DATA
COLLECTION

114

102

PROGRAM
SOURCE #1

PROGRAM
SOURCE #2

PROGRAM
SOURCE #N

104

CHANNEL
MODULATOR #1

CHANNEL
MODULATOR #2

CHANNEL
MODULATOR #N

110
NODE #1

110
NODE #1

110
NODE #1

SUB #1A

SUB #1A

SUB #1A

SUB #1A

SUB #1A

SUB #1A

SUB #1A

SUB #1A

SUB #1A

10

EP 0 962 098 B1

# FIG. 2

202

**SCHEDULE OF AVAILABLE SHOWS AND THEIR CHARACTERISTICS**

204

**VIEWER'S PREFERRED CHARACTERISTICS (DEPENDS ON TIME OF DAY)**

206 — **CALCULATE AGREEMENT MATRIX**

208 — **SELECT PROGRAMS FOR VIRTUAL CHANNELS (FIG. 3)**

210 — **MONITOR WHAT WAS ACTUALLY WATCHED**

212 — **UPDATE VIEWER'S PROFILES, APPETITES**

## FIG. 3

208

```
INITIALIZE:
SELECT VIEWER PROFILES AND        302
APPETITES AND DETERMINE
AVAILABLE MOVIES
```

```
SELECT MOST POPULAR
PROGRAM AND REMOVE IT FROM        304
LIST OF AVAILABLE PROGRAMS
```

306
```
ALL
APPETITES
SATISFIED
?
```

308
( STOP )

```
DECREMENT APPETITE OF
VIEWERS (PROFILES) LIKELY TO      310
WATCH THE SELECTED PROGRAM
```

```
REMOVE PROFILES/VIEWERS FROM
ACTIVE LIST WHO HAVE NO           312
APPETITE LEFT
```

## FIG. 4

FROM CATV SYSTEM

TO TV

TO TELEPHONE SYSTEM

112

TUNER 402

DESCRAMBLER 416

MODULATOR 418

VIDEO

CONTROL

ON SCREEN 414

MICROPROCESSOR 406

VIDEO

MEMORY 412

RF MODULATOR 424

TELEPHONE INTERFACE

420

DATA RECEIVER 404

DATA

ENCRYPT 422

INFRARED RECEIVER 410

REMOTE CONTROL 408

EP 0 962 098 B1

35

FROM
CATV SYSTEM

TO TV

504 — PROGRAM CHARACTERISTIC LIST

514 — DISPLAY GUIDE

508

502 — AVAILABLE/ AUTHORIZED PROGRAM LIST

406 — PROCESSOR

AGREEMENT MATRIX

518 — SUBSCRIBER IDENTIFIER

512

TIME OF DAY/ MOOD INDICATOR

510

CHANNEL SELECTOR

520

516 — SUBSCRIBER INPUT

*FIG. 5*

EP 0 962 098 B1

## FIG. 6

```
┌─────────────────────┐
│  DETERMINE SET OF   │
│    ATTRIBUTES FOR   │  ~ 601
│   TARGET OBJECT     │
└─────────────────────┘
           │
           ▼
┌─────────────────────┐
│   ASSIGN ATTRIBUTE  │
│ WEIGHT AS A FUNCTION│  ~ 602
│     OF THE USER     │
└─────────────────────┘
           │
           ▼
┌─────────────────────┐
│   COMPUTE WEIGHTED  │
│    SUM OF SELECTED  │
│ NORMATIVE ATTRIBUTES│  ~ 603
│   OF TARGET OBJECT  │
└─────────────────────┘
           │
           ▼
┌─────────────────────┐
│  RETRIEVE SUMMARIZED│
│  WEIGHTED RELEVANCE │  ~ 604
│    FEEDBACK DATA    │
└─────────────────────┘
           │
           ▼
┌─────────────────────┐
│COMPUTE TOPICAL INTEREST│
│ OF TARGET OBJECT FOR │
│ SELECTED USER BASED ON│  ~ 605
│  RELEVANCE FEEDBACK  │
│    FROM ALL USERS   │
└─────────────────────┘
```

**FIG. 7**

INITIALIZE LIST OF IDENTIFIED TARGET OBJECTS TO THE EMPTY LIST — 700

INITIALIZE CURRENT TREE TO THE HEIRARCHICAL CLUSTER TREE OF ALL OBJECTS — 701

$i = 0$ — 702

$i = i + 1$ — 703

CALCULATE $d(P, p_i)$ — 704

705
IS $d(P, p_i) < t$ ?
NO
YES

706
DOES TREE i CONTAIN ONE OBJECT ?
NO
YES

ADD TARGET OBJECT TO LIST OF OBJECTS — 707

EXIT IF i>n, ELSE RETURN — 708

|##############MAXIMUM   BANDWIDTH   ##########

UNUSED
BANDWIDTH

REQUIRED
BANDWIDTH

V

TIME--------|----------|----------|----------|----------|----------|------------->
0        10        20        30        40        50

**Figure 8**

```
        O
       / \
      }   {
      .     .
     .       .
    .         .
   V
       Client<------>Server
```

# Figure 9

```
        C1
   C2   |   C3
      \  |  /
        \|/
   C4---S---C5
       / \
      C6  C7
```

# Figure 10